# EUROPEAN PATENT APPLICATION

(11) **EP 4 804 244 A2**
(43) Date of publication of application: **09.09.2026**
(21) Application number: 26194879.8
(22) Date of filing: 02.02.2024
(51) Int. Cl.: H01M 4/04

(54) **CALENDERED CATHODE COMPOSITIONS AND METHODS OF MAKING THEREOF**

(30) Priority: 03.02.2023 US 202363483238 P; 15.06.2023 US 202363521297 P; 27.10.2023 US 202363546173 P
(62) Document number(s) of the earlier application(s) in accordance with Art. 76 EPC: 24711370.7 / 4 480 017
(71) Applicant: QuantumScape Battery, Inc., San Jose, CA 95110 (US)
(72) Inventor: JOKHAKAR, Deep Ashutosh, SAN JOSE, 95110 (US); PARIKH, Vihang, SAN JOSE, 95110 (US); TOKUOKA, Saori, SAN JOSE, 95110 (US); ANIAGOH, William, SAN JOSE, 95110 (US); TAO, Ran, SAN JOSE, 95110 (US); NARITA, Yusuke, SAN JOSE, 95110 (US)
(74) Representative: Carpmaels & Ransford LLP

(57) **Abstract**

Provided herein are compositions and methods for calendering cathode materials for lithium battery construction.

## Description

### CROSS-REFERENCE TO RELATED APPLICATIONS

This application claims the benefit of U.S. Provisional Application Nos. 63/483,238 (filed February 3, 2023), 63/521,297 (filed June 15, 2023), and 63/546,173 (filed October 27, 2023). These applications are incorporated by reference in their entirety for all purposes.

### FIELD

Provided herein are compositions and methods for calendering materials, such as (but not limited to) cathode electrodes, for lithium battery construction.

### BACKGROUND

There is currently an unmet need in the rechargeable lithium battery field directed to superior methods of calendering materials for electrode (e.g., cathode) preparation. Calendering is a common method of adjusting the surface properties of a substance, such smoothness, as well as the substance's porosity and/or density. Because the cathode material and its current collector have different physical properties, calendering, which may also include heating and pressure application, can produce edge defects in the product, which are not suitable for use in an electrode.

Therefore, there is a continuing need for improved methods of calendering that can reduce or eliminate the amount of edge defects in a bilayer composition (e.g., a cathode and its current collector).

Set forth herein are solutions to this and other problems in the relevant field.

### SUMMARY

Provided herein are bilayer compositions and methods of making bilayer compositions with superior properties, which are useful, e.g., in cathodes *(i.e.,* positive electrodes) of rechargeable lithium-batteries for reversibly storing lithium ions (Li⁺).

In one aspect, provided herein is a bilayer including:
a metal substrate having at least two longitudinal edges and at least two transverse edges; and
a cathode material disposed on the metal substrate;
where the cathode material covers at least about 50% of the surface of the metal substrate but does not cover the longitudinal edges.

In one aspect, provided herein is a bilayer including:
a metal substrate having at least two longitudinal edges and at least two transverse edges; and
a cathode material disposed on the metal substrate;

where the cathode material covers at least about 50% of the surface of the metal substrate but does not cover the longitudinal edges; and
where the longitudinal edges comprise one or more cuts that extend from a longitudinal edge to the cathode material.

In certain embodiments, the cathode material of the bilayer is disposed on the metal substrate in two lanes (e.g., two lanes of cathode material, either continuous or discontinuous, that are parallel to the longitudinal edges).

In certain embodiments, the cathode material of the bilayer is disposed on the metal substrate in three lanes (e.g., two broad outer lanes and a narrow middle lane of cathode material, each of which is parallel to the longitudinal edges). In certain embodiments, the cathode material of the bilayer is disposed on the metal substrate in four or more lanes.

In a second aspect, provided herein is a green bilayer including:
a metal substrate having at least two longitudinal edges and at least two transverse edges; and
a cathode material disposed on the metal substrate;

where the cathode material covers at least about 50% of the surface of the metal substrate but does not cover the longitudinal edges; and
where the longitudinal edges comprise one or more cuts that extend from a longitudinal edge toward the cathode material.

In certain embodiments as otherwise taught herein, the green bilayer comprises at least three lanes of coating material disposed on the metal substrate; and wherein a first and a second lane of the coating material comprise the cathode material.

In certain embodiments, the cathode material of the green bilayer is disposed on the metal substrate in two lanes as otherwise disclosed herein. In certain embodiments, the cathode material of the green bilayer is disposed on the metal substrate in three lanes as otherwise disclosed herein. In certain embodiments, the cathode material of the green bilayer is disposed on the metal substrate in four or more lanes as otherwise disclosed herein.

In a third aspect, provided herein is a process of making a cathode, the process including:
providing a green bilayer including:
a metal substrate having at least two longitudinal edges and at least two transverse edges; and
a cathode material disposed on the metal substrate;
   wherein the cathode material covers at least about 50% of the surface of the metal substrate, but does not cover the longitudinal edges; and
   wherein the longitudinal edges comprise one or more cuts that extend from a longitudinal edge to the cathode material disposed on the metal substrate; and calendering the green bilayer.

In a fourth aspect, provided herein is a process of making a cathode, including:
coating a metal substrate with a cathode slurry to provide a green bilayer comprising a cathode material disposed on the metal substrate,
   wherein the metal substrate has at least two longitudinal edges and at least two transverse edges;
   wherein the cathode material covers at least about 50% of the surface of the metal substrate, but does not cover the longitudinal edges; and
calendering the green bilayer; and
die punching the green bilayer to produce the cathode.

In certain embodiments, the process further includes using a laser pattern to prepare the green bilayer for later die punching.

In certain embodiments, the process further includes cutting the metal substrate; wherein the cutting includes one or more cuts on longitudinal edges, and wherein the one or more cuts extend from a longitudinal edge to a cathode material disposed on the metal substrate.

In certain embodiments, calendering the green bilayer is conducted at a temperature of less than 100 °C. In certain embodiments, the green bilayer is calendered at a temperature of less than 75 °C. In certain embodiments, the green bilayer is calendered at a temperature of less than 50 °C. In certain embodiments, the green bilayer is calendered at a temperature from 30 °C to 100 °C, from 40 °C to 90 °C, or from 50 °C to 75 °C.

In a fifth aspect, provided herein is a bilayer including:
a metal substrate having at least two longitudinal edges and at least two transverse edges;
at least three lanes of coating material disposed on the metal substrate;

wherein a first and a second lane of coating material include cathode material,
wherein the coating material covers at least about 50% of the surface of the metal substrate but does not cover the longitudinal edges; and
wherein the longitudinal edges comprise one or more cuts that extend from a longitudinal edge toward the coating material.

In a sixth aspect, provided herein is a metal foil including two longitudinal edges and two transverse edges and coated with a coating material; wherein the coating material does not coat the longitudinal edges; wherein the coating material is spaced by parallel, or nearly parallel, exposed metal foil; and wherein the longitudinal edges comprise one or more cuts that extend from a longitudinal edge toward the coating material.

These and other aspects and embodiments are set forth by the present invention.

### BRIEF DESCRIPTION OF THE FIGURES

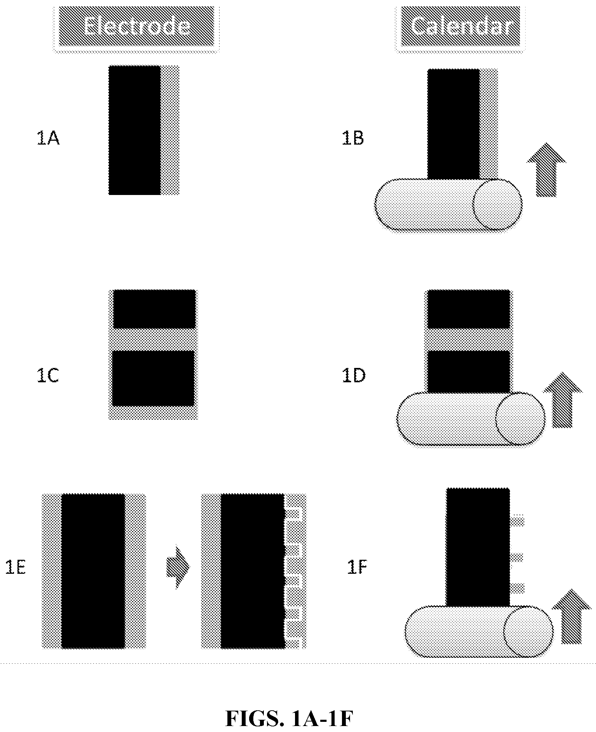

FIGS. 1A-1F are a comparison of some exemplary cathodes for continuous, intermittent, and continuous with tab cutting. FIG. 1A shows a continuous cathode, while FIG. 1B shows its calendering. FIG. 1C shows an intermittent (i.e., patch coated) cathode, while FIG. 1D shows its calendering. FIG. 1E shows a continuous cathode with tab cutting, while FIG. 1F shows its calendering.
FIG. 2A is a diagram of a standard calendering process to 25% porosity by volume (exclusive of the active material porosity), while FIG. 2B shows a photograph of a calendered cathode with noticeable wrinkling and edge defects.
FIG. 3 is a process diagram for an exemplary calendering process with a cathode slit and cut gaps on the longitudinal edge.
FIG. 4 illustrates the effects of tab structure on the amount of wrinkling and burring.
FIGS. 5A-5D are several embodiments of different pattens for cuts. FIG. 5A shows a pattern of slits (or shapes) across the entire length on both sides, while FIGS. 5B and 5C show embodiments with different shapes (or slits) on both sides. FIG. 5D shows an embodiment with different slits on one side and different shapes on the other side.

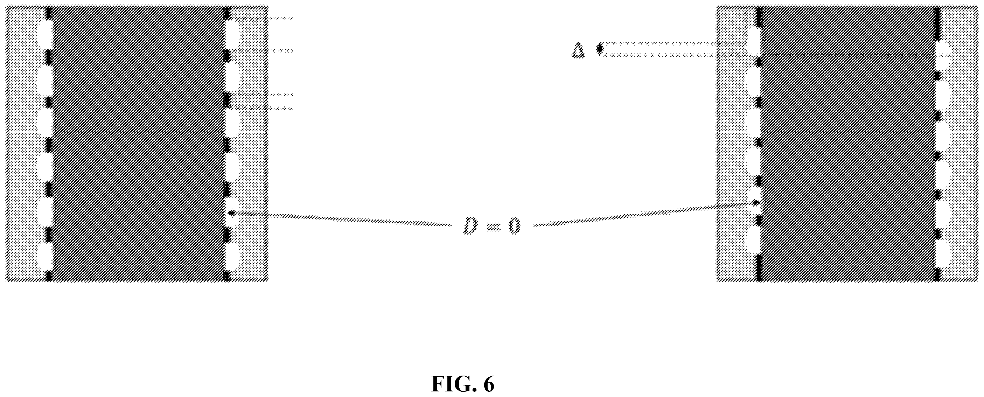

FIG. 6 shows embodiments of a cathode with no offset (left) and with an offset (right).
FIGS. 7A-7E show an embodiment of an inventive process comprising laser notching (i.e., a center lane process). FIG. 7A shows coating a foil to form a coated foil with two center lanes of uncoated foil; FIG. 7B shows laser notching of the center lanes of the coated foil; FIG. 7C shows calendering of the notched foil; FIG. 7D shows a center cut (here, "slitting") of the foil between the notched areas; and FIG. 7E shows die punching of the foil.
FIGS. 8A-8E show a second embodiment of an inventive process comprising laser notching (i.e., an edge lane process). FIG. 8A shows coating a foil to form a coated foil with two edge lanes; FIG. 8B shows laser notching of the edge lanes of the coated foil; FIG. 8C shows calendering of the notched foil; FIG. 8D shows a center cut (here, "slitting") of the foil between the notched areas; and FIG. 8E shows die punching of the foil.

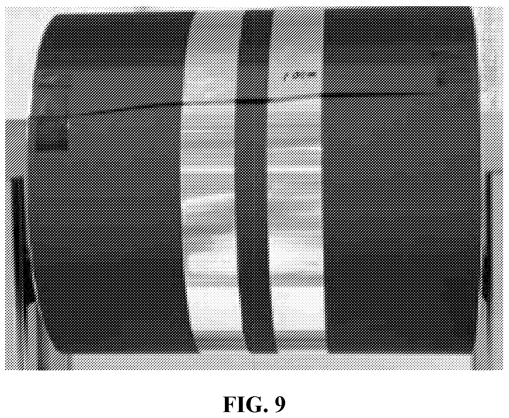

FIG. 9 shows a picture of a coated and calendered cathode roll. The side lanes are around 90 mm wide, the middle lane is around 20 mm wide, and the uncoated foil portions are around 30 mm wide.

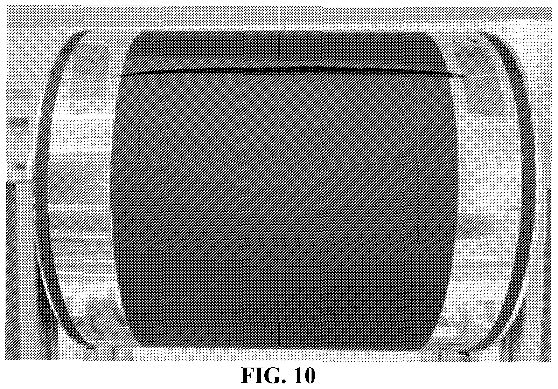

FIG. 10 shows a picture of a coated and calendered cathode roll. The coated lane in the middle is around 180 mm wide, and the coated lanes on the sides are around 10 mm wide, and the uncoated regions of foil are around 30 mm wide.

### DETAILED DESCRIPTION

### Description Of Exemplary Embodiments

Provided herein are compositions and methods for calendering bilayer electrode (i.e., cathode) materials useful for lithium-ion and lithium-metal battery construction.

Also provided herein are compositions and methods for calendering bilayer electrode materials useful for lithium-ion batteries and lithium-metal batteries comprising a solid-state separator.

In certain aspects and embodiments as otherwise disclosed herein, the compositions and methods provide improved edge effects after calendering. In certain embodiments, the improved edge effects include eliminating or reducing edge effects.

### Definitions

When referring to the compositions and methods provided herein, the following terms have the following meanings unless indicated otherwise. Unless defined otherwise, all technical and scientific terms used herein have the same meaning as is commonly understood by one of ordinary skill in the art. If there is a plurality of definitions for a term herein, those in this section prevail unless stated otherwise.

As used herein, the terms "a," "an," and "the" not only includes aspects with one member, but also includes aspects with more than one member. For example, an embodiment with "a cathode active material and a binder" should be understood to present certain aspects with at least a second cathode active material, at least a second binder, or both.

As used herein, the term "about," when qualifying a number, e.g., about 15 % w/w, refers to the number qualified and optionally the numbers included in a range about that qualified number that includes ± 10% of the number. For example, about 15 % w/w includes 15 % w/w as well as 13.5 % w/w, 14 % w/w, 14.5 % w/w, 15.5 % w/w, 16 % w/w, or 16.5 % w/w. For example, "about 75 °C" includes 75 °C as well 68 °C, 69 °C, 70 °C, 71 °C, 72 °C, 73 °C, 74 °C, 75 °C, 76 °C, 77 °C, 78 °C, 79 °C, 80 °C, 81 °C, 82 °C, or 83 °C.

As used herein, the phrase "selected from the group consisting of" refers to a single member from the group, more than one member from the group, or a combination of members from the group. A member selected from the group consisting of A, B, and C includes, for example, A only, B only, or C only, as well as A and B, A and C, B and C, as well as A, B, and C.

As used herein, the term "or" refers to a single member from the group, more than one member from the group, or a combination of members from the group. A member selected from the group consisting of A, B, and C includes, for example, A only, B only, or C only, as well as A and B, A and C, B and C, as well as A, B, and C.

As used herein, the term "dry air" refers to air with a reduced amount of humidity. Dry air may be supplied in a clean room. Dry air is characterized as having a dew point less than -10 °C.

As used herein, the term "cathode active material" refers to a material which can intercalate lithium ions or react with lithium ions in a reversible manner. Examples include LiMPO₄ (M=Fe, Ni, Co, Mn); LiₓTi_{y}O_{z}, wherein x is from 0 to 8, y is from 1 to 12, z is from 1 to 24; LiMn₂ₐNiₐO₄, wherein a is from 0 to 2; a nickel cobalt aluminum oxide; LiNiₓMn_{y}Co_{z}O₂, x+y+z=1, 0≤x≤1, 0≤y≤1, and 0≤z≤1; and LiNiₓCo_{y}Al_{z}O₂, wherein x+y+z=1, and 0≤x≤1, 0≤y≤1, and 0≤z≤1. In these formula, x, y, and z are chosen so that the formula is charge neutral.

As used herein, the term "solid-state cathode" refers to a cathode which does not include any liquid-phase electrolytes.

As used herein, the terms "cathode" and "anode" refer to the electrodes of a battery. The cathode and anode are often referred to in the relevant field as the positive electrode and negative electrode, respectively. In some usages, cathode is used in place of positive electrode, and anode is used in place of negative electrode. During a charge cycle in a Li-secondary battery, Li ions leave the cathode and move through an electrolyte, to the anode. During a charge cycle, electrons leave the cathode and move through an external circuit to the anode. During a discharge cycle in a Li-secondary battery, Li ions migrate towards the cathode through an electrolyte and from the anode. During a discharge cycle, electrons leave the anode and move through an external circuit to the cathode.

As used herein, the term "positive electrode" refers to the electrode in a secondary battery towards which positive ions, e.g., Li⁺, conduct, flow or move during discharge of the battery. As used herein, the term "negative electrode" refers to the electrode in a secondary battery from where positive ions, e.g., Li⁺, flow or move during discharge of the battery. In a battery comprised of a Li-metal electrode and a conversion chemistry, intercalation chemistry, or combination conversion/intercalation chemistry-including electrode (i.e., cathode active material; e.g., NiFₓ, LiNiₓMn_{y}Co_{z}O₂ (NMC), LiNiₓAl_{y}Co_{z}O₂ (NCA), wherein x+y+z =1; or, doped LiCoO₂, such as La-doped LiCoO₂, Al-doped LiCoO₂, or a combination thereof), the electrode having the conversion chemistry, intercalation chemistry, or combination conversion/intercalation chemistry material is referred to as the positive electrode. In some usages, "cathode" is used in place of "positive electrode," and "anode" is used in place of "negative electrode." When a Li-secondary battery is charged, Li⁺ ions move from the positive electrode (e.g., NiFₓ, NMC, NCA) towards the negative electrode (e.g., Li-metal). When a Li-secondary battery is discharged, Li⁺ ions move towards the positive electrode and from the negative electrode.

As used herein, the term "cathode material" refers to the mixture of components that form the positive electrode. Typically, the cathode material comprises at least one cathode active material and at least one binder.

As used herein, the term "solid separator" refers to a Li⁺ ion-conducting material that is substantially insulating to electrons (e.g., the lithium-ion conductivity is at least 10³ times, and often 10⁶ times, greater than the electron conductivity), and which acts as a physical barrier or spacer between the positive and negative electrodes in an electrochemical cell.

As used herein, the term "edge defects" refers to a bend, a bubble, a crack, a chip, a delamination, a warp, a wrinkle, or the like, as well as combinations thereof (i.e., anything that interrupts or reduces the conformal matching of the cathode to the current conductor). In general, edge defects are defects in shape or contact rather than chemical composition, and they are typically visible without microscopy.

As used herein, the term "substantial edge defects" refer to edge defects that cause at least about 5% of a current collector or cathode to be unusable for later steps in battery fabrication, either because of physical deformation, poor physical contact with the cathode current collector, or a combination thereof.

As used herein, the term "calendering" refers to a process in which metal rolls, typically of hardened steel, are used to exert pressure on a surface (e.g., the surface of a cathode and its current collector) to alter its properties, e.g., to change the porosity of the material or to smooth its surface.

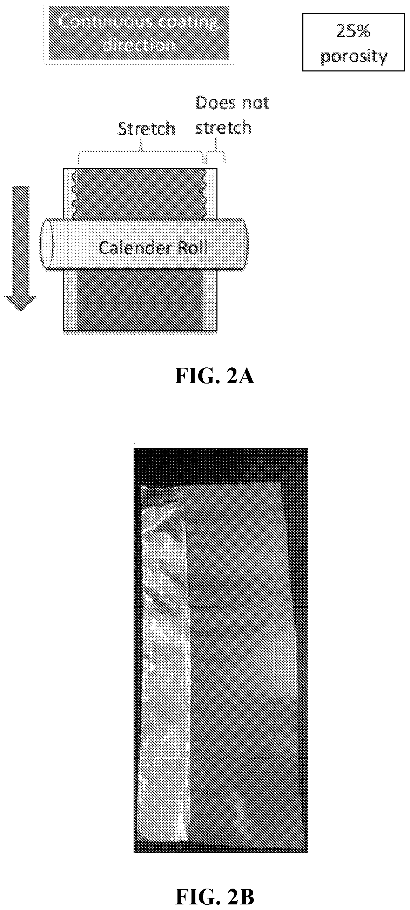

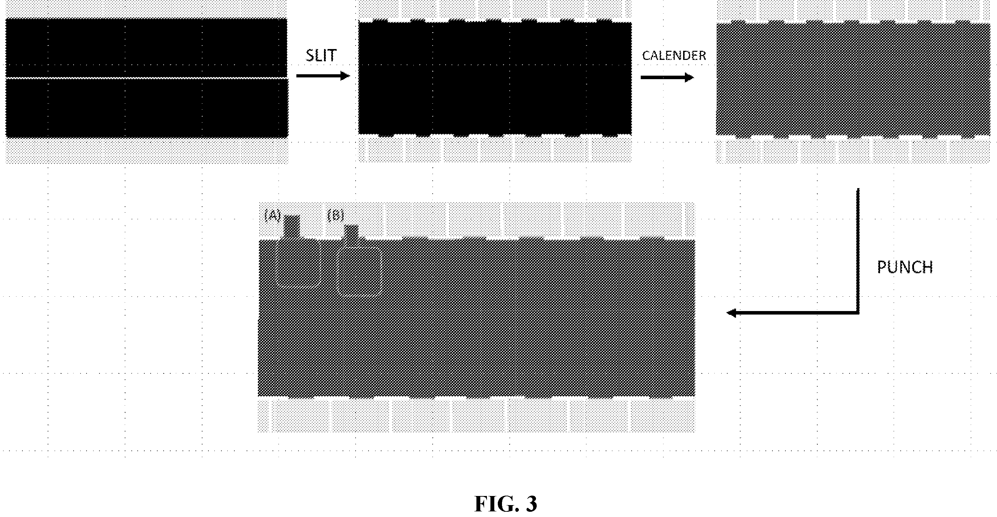

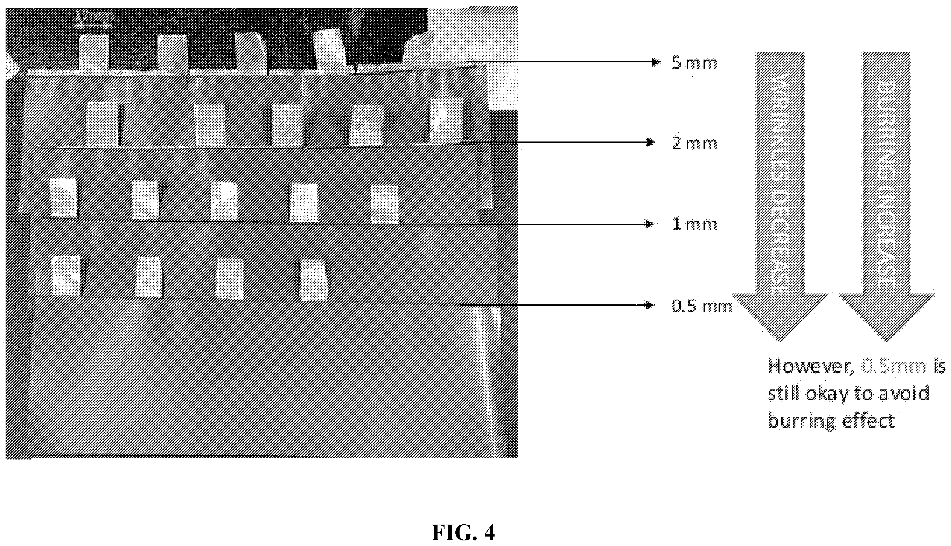

As used herein, the term "cut" refers to an intentional discontinuity or break in a surface (e.g., the surface of a cathode current collector). A cut can be a gap, in which the edges of the cut are not touching (e.g., FIG. 3 or FIG. 4), or a slit, in which the edges of the cut are in close proximity (e.g., FIG. 2).

As used herein, the term "longitudinal edge" refers to the edge of a cathode/current collector that is parallel (or, for an irregular edge shape, closer to parallel) to the direction in which the calendering process is occurring.

As used herein, the term "transverse edge" refers to the edge of a cathode/current collector that is perpendicular (or, for an irregular edge shape, closer to perpendicular) to the direction in which the calendering process is occurring.

As used herein, the term "center cut" refers to a cut paralle1 to the longitudinal edge. In a preferred embodiment, the center cut bisects the transverse edge. For example, FIG. 2 illustrates an example of such a center cut.

As used herein, the term "periodic" or "periodically" refers to a feature or effect that repeats at a regular interval. For electrodes, this generally is a spatial interval, such as a set of periodic parallel cuts, each, for example, 2.0 cm apart.

As used herein, the term "patch coating" refers to a gap in the cathode material on the surface of the current collector. In general, this gap is periodic.

As used herein, the term "lane" refers to an area of metal substrate (e.g., in a cathode or cathode precursor) that is coated with cathode material, either continuously or in patch coating, which can be close to the midpoint of the metal substrate ("middle lane") or to the longitudinal edges of the metal substrate ("outer lane"). In certain preferred embodiments, a lane is separated from a second lane by an area of metal substrate that is not coated with cathode material and with its longest dimension parallel to the transverse edge.

The term "center lane" refers to an uncoated area between two coated lanes, in which the uncoated area is an area of metal substrate with its longest dimension parallel to the transverse edge. The term "edge lane" refers to an uncoated area on the edge of a coated area (e.g., at the longitudinal edge).

As used herein, the term "coating material" refers either to a composition that includes an active material or to a dummy cathode material (e.g., not including the active material). In certain embodiments, a dummy cathode material is like the cathode material in physical properties (e.g., viscosity, height of coating material) during application or processing of the green bilayer, but the dummy cathode material omits the active material that is included in the cathode material. In certain embodiments, the dummy cathode material includes an inexpensive carbon material with similar physical properties instead of the active material. In certain embodiments, the coating material is deposited on a metal foil by casting a slurry. Casting may be accomplished using a draw down table or a doctor blade coating apparatus. The slurry is allowed to dry, optionally with heating, before being calendered.

As used herein, "binder" refers to a polymer with the capability to increase the adhesion and/or cohesion of material, such as the solids in a green tape. A "binder" refers to a material that assists in the adhesion of another material.

As used herein, the phrase "d₅₀ diameter" refers to the median size, in a distribution of sizes, measured by microscopy techniques or other particle size analysis techniques, such as, but not limited to, scanning electron microscopy or dynamic light scattering. "D₅₀" includes the characteristic dimension at which 50% of the particles are smaller than the recited size.

As used herein, the phrase "d₉₀ diameter" refers to a size, in a distribution of sizes, measured by microscopy techniques or other particle size analysis techniques, such as, but not limited to, scanning electron microscopy or dynamic light scattering. "D₉₀" includes the characteristic dimension at which 90% of the particles are smaller than the recited size.

As used herein, the phrase "film" or "thin film" refers to a thin membrane of less than about 10 mm in thickness and greater than about 0.5 nm in thickness. A thin film is also greater than 5 mm in a lateral dimension. A "film" or "thin film" may be produced by a continuous process such as tape-casting, slip casting, or screen-printing.

As used herein, the phrase "film thickness" refers to the distance, or median measured distance, between the top and bottom faces of a film. As used herein, the top and bottom faces refer to the sides of the film having the largest surface area. As used herein, thickness is measured by cross-sectional scanning electron microscopy.

A "bilayer" as set forth herein is a composite material that includes a green body (e.g., cathode material) deposited onto a metal layer. In some examples, the green body is continuous, and in other examples, the green body is deposited in a patch coating format. In some examples, a green body is made by casting and then drying a slurry. In some examples, one layer of the bilayer is a metal foil. The metal foil may be made of nickel (Ni), copper (Cu), aluminum (Al), iron (Fe), alloys thereof, and combinations thereof. In some embodiments, the bilayer is calendered. In some embodiments, the bilayer is sintered, baked, or calcined.

As used herein, "green" refers to a bilayer that has not (or not yet) been calendered. A "green bilayer" as set forth herein is a composite material that includes a green body deposited onto a metal layer. In some examples, the green body is continuous, and in other examples, the green body is deposited in a patch coating format. A green body is made by casting and then drying a slurry. In some examples, a green bilayer is a bilayer that is either not dry or that has not been dried. In some examples, one layer of the bilayer is a metal foil. The metal foil may be made of nickel (Ni), copper (Cu), aluminum (Al), iron (Fe), alloys thereof, and combinations thereof.

### Bilayer Compositions

Provided herein are bilayer compositions useful for electrode (i.e., cathode) materials in solid-state lithium battery construction.

In certain aspects and embodiments, provided herein is a bilayer including:
a metal substrate having longitudinal edges and transverse edges; and
a cathode material disposed on the metal substrate; and
where the longitudinal edges comprise one or more cuts that extend from the longitudinal edge to the cathode material.

In certain embodiments as otherwise taught herein, the cathode material covers at least about 50% of the surface of the metal substrate, but does not cover the longitudinal edges.

In certain embodiments as otherwise taught herein, the bilayer comprises at least three lanes of coating material disposed on the metal substrate; and wherein a first and a second lane of the coating material comprise the cathode material.

Suitable binders may include, but are not limited to, polyvinylidene fluoride (PVDF), polyvinylidene fluoride hexafluoropropylene (PVDF-HFP), styrene butadiene rubber (SBR), and ethylene alpha-olefin copolymer. For example, as used herein, polyvinyl butyral is a binder because it is useful for adhering, e.g., garnet materials. Other binders may include polycarbonates. Other binders may include polyacrylates and polymethacrylates. These examples of binders are not limiting as to the entire scope of binders contemplated here, but merely serve as examples. Binders useful in the present disclosure include, but are not limited to, polypropylene (PP), polyethylene, atactic polypropylene (aPP), isotactic polypropylene (iPP), ethylene propylene rubber (EPR), ethylene pentene copolymer (EPC), polyisobutylene (PIB), styrene butadiene rubber (SBR), polyolefins, polyethylene-co-poly-1-octene (PE-co-PO), polyethylene-co-poly(methylene cyclopentane) (PE-co-PMCP), poly(methyl methacrylate) (and other acrylics), acrylic, polyvinylacetacetal resin, polyvinyl butyral resin, PVB, polyvinyl acetal resin, stereoblock polypropylenes, polypropylene polymethylpentene copolymer, polyethylene oxide (PEO), PEO block copolymers, silicone, and the like. In certain embodiments, including any of the foregoing, the binder is a polymer selected from the group consisting of polyacrylonitrile (PAN), polypropylene, polyethylene, polyethylene oxide (PEO), poly methyl methacrylate (PMMA), polyvinyl chloride (PVC), polyvinyl pyrrolidone (PVP), polyethylene oxide poly(allyl glycidyl ether) PEO-AGE, polyethylene oxide 2-methoxy ethoxy ethyl glycidyl ether (PEO-MEEGE), polyethylene oxide 2-methoxyethoxyethyl glycidyl poly(allyl glycidyl ether) (PEO-MEEGE- AGE), polysiloxane, polyvinylidene fluoride (PVDF), polyvinylidene fluoride hexafluoropropylene (PVDF-HFP), ethylene propylene (EPR), nitrile rubber (NPR), styrene-butadiene-rubber (SBR), polybutadiene polymer, polybutadiene rubber (PB), polyisobutadiene rubber (PIB), polyolefin, alpha-polyolefin, ethylene alpha-polyolefin, polyisoprene rubber (PI), polychloroprene rubber (CR), acrylonitrile-butadiene rubber (NBR), and polyethyl acrylate (PEA). In some examples, a binder may be a monopolymer or a co-polymer. In some examples, a binder may be a PVdF-based polymer, a PVdF-based co-polymer, or a combination thereof.

In certain embodiments as otherwise disclosed herein, a cathode slurry comprises a carbon source, such as carbon black, acetylene black, graphite, graphene, furnace black, ketjen black, single-wall carbon nanotubes, multiwall carbon nanotubes, or a combination thereof. The carbon source may be added into the cathode slurry in about 1-3 w/w%.

In certain embodiments as otherwise disclosed herein, a cathode slurry comprises a surfactant. In certain embodiments, the surfactant is a hyperbranched polyamine copolymer, or a polyacrylonitrile copolymer.

In certain embodiments as otherwise disclosed herein, a cathode slurry comprises a binder. In certain embodiments, the binder may be functionalized PVDF polymers, polyvinyl alcohol, polyamines, polyacrylates, polyurethanes, polystyrenes, or any combination thereof. In certain embodiments as otherwise disclosed herein, a cathode slurry comprises a cathode active material and a carbon source, and optionally a surfactant and optionally a binder. In certain embodiments, a dummy slurry is used applied to a foil substrate at the same height as the cathode slurry. The dummy slurry may not contain cathode active material.

In certain embodiments as otherwise taught herein, the cuts have a T-shape (e.g., FIG. 2). In certain embodiments, the cuts have an L-shape. In certain embodiments, the cuts have an I-shape. In certain embodiments, the cuts have a cross-shape. In certain embodiments, the cuts have a U-shape (e.g., FIG. 3). In certain embodiments, the cuts have a V-shape.

In certain embodiments as otherwise taught herein, one or more of the cuts are gaps. In certain embodiments, one or more of the cuts are slits.

In certain embodiments as otherwise taught herein, one or more longitudinal edges between the cuts are shaped as one or more battery tabs.

In certain embodiments as otherwise taught herein, the metal substrate has one or more perforations or indentations shaped as one or more battery tabs. In certain embodiments, the one or more perforations or indentations are disposed along a longitudinal edge. In certain embodiments, the one or more perforations or indentations are disposed proximate to a longitudinal edge.

In certain embodiments as otherwise taught herein, the cuts are periodically spaced. In certain embodiments, the cuts are periodically spaced between 1 and 20 cm apart (e.g., about 1, 1.5, 2, 2.5, 3, 3.5, 4, 4.5, 5, 6, 7, 8, 9, 10, 11, 12, 13, 14, 15, 16, 17, 18, 19, or 20). In certain embodiments, the cuts are periodically spaced between 3 and 10 cm apart (e.g., about 3, 3.5, 4, 4.5, 5, 5.5, 6, 6.5, 7, 7.5, 8, 8.5, 9, 9.5, or 10). In certain embodiments, provided herein is the bilayer as otherwise taught herein, where the cuts are not periodically spaced.

In certain embodiments as otherwise taught herein, the cuts are present on both longitudinal edges. In some embodiments, the cuts on one longitudinal edge are the same as the cuts on the other longitudinal edge. In some other embodiments, the cuts on one longitudinal edge are different from the cuts on the other longitudinal edge. In certain embodiments, one longitudinal edge has T-slit cuts, and the other longitudinal edge has rectangular cuts.

In certain embodiments as otherwise taught herein, the cathode material covers the substrate as patches (i.e., patch coating).

In certain embodiments as otherwise taught herein, the cathode material covers at least one or more transverse edges.

In certain embodiments as otherwise taught herein, the cathode further includes a center cut (i.e., a cut parallel to the longitudinal edge). In certain embodiments, the cuts are present on both longitudinal edges and the cathode further includes a center cut (e.g., FIG 2).

In certain embodiments as otherwise taught herein, the cathode further includes one or more slits. In certain embodiments, the slits include an I-shape, an L-shape, a T-shape, or combinations thereof. In certain embodiments, the slits have an I-shape. In certain embodiments, the slits have an L-shape. In certain embodiments, the slits have a T-shape.

In certain embodiments as otherwise taught herein, the cuts include one or more geometric shapes. In certain embodiments, the geometric shapes include a triangle, a semicircle, an arch, a trapezoid, a parallelogram, or combinations thereof. In certain embodiments, the geometric shapes include a triangle. In certain embodiments, the geometric shapes include a semicircle. In certain embodiments, the geometric shapes include an arch. In certain embodiments, the geometric shapes include a trapezoid. In certain embodiments, the geometric shapes include a parallelogram, such as a rectangle (e.g., a square).

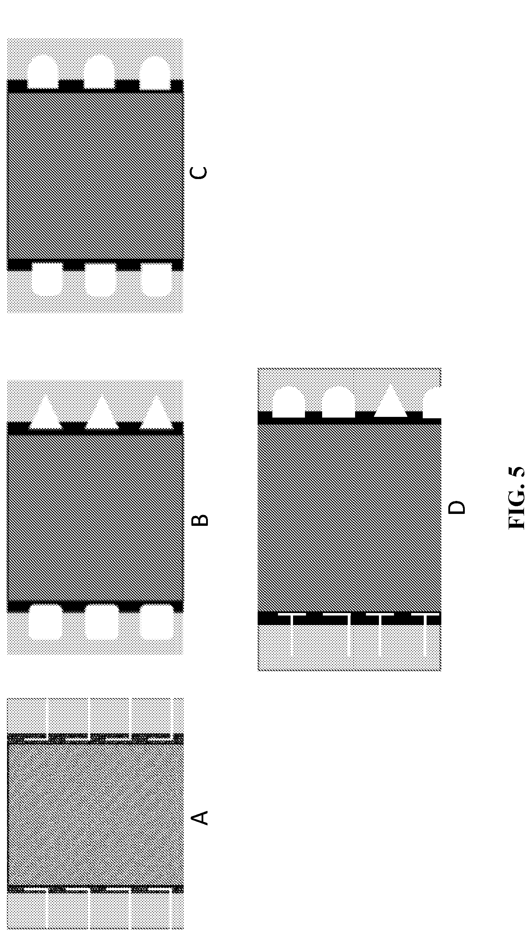

In certain embodiments as otherwise taught herein, the cuts include one or more slits and one or more geometric shapes (e.g., alternating T-shape slits and rectangles). The pattern can be a periodic or non-periodic sequence and may combine different slits and different geometric shapes, e.g., without limitation to the embodiments described in FIG. 5. In certain embodiments, the electrodes can have either slits or shapes or both on each side, across the entire length or a certain length of the roll. In certain embodiments, electrodes also have a mix and match of various slits and shapes on the same edge as well (e.g., L-shape, square, L-shape, or square).

In certain embodiments as otherwise taught herein, an edge of the cuts is from about 0 to 6 mm from the edge of the cathode material (e.g., about 0, 0.25, 0.5, 0.75, 1.0, 1.25, 1.5, 1.75, 2.0, 2.5, 3.0, 3.5, 4.0, 4.5, 5.0, 5.5, or 6.0 mm). In certain embodiments, an edge of the cuts is from about 0 to 0.2 mm from the edge of the cathode material (e.g., about 0.01, 0.02, 0.025, 0.03, 0.04, 0.05, 0.06, 0.07, 0.075, 0.08, 0.09, 0.10, 0.11, 0.12, 0.125, 0.13, 0.14, 0.15, 0.16, 0.17, 0.175, 0.18, 0.19, or 0.20 mm).

In certain embodiments as otherwise taught herein, a distance between an edge of a first cut and an edge of a second, adjacent cut is from about 5 mm to 75 mm from the edge of the cathode material (e.g., about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 mm).

In certain embodiments as otherwise taught herein, the cathode has an active material loading of at least about 29 mg/cm² (i.e., at least about 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 mg/cm²). In certain embodiments, the cathode has an active material loading of at least about 5 to 50 mg/cm² (i.e., about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 mg/cm²).

In certain embodiments as otherwise taught herein, the cathode thickness is about 190 µm to 240 µm (e.g., about 150 to 300 µm, about 175 to 275 µm, about 190 to 240 µm, or about 200 to 250 µm). In certain embodiments, the cathode thickness is less than about 250 µm (e.g., from 5, 10, 25, 50, 75, or 100 to 250 µm). In certain embodiments, the cathode thickness is less than about 200 µm (e.g., from 5, 10, 25, 50, 75, or 100 to 200 µm). In certain embodiments, the cathode thickness is less than about 150 µm (e.g., from 5, 10, 25, 50, 75, or 100 to 150 µm). In certain embodiments, the cathode thickness is between about 100 to 250 µm.

In certain embodiments as otherwise taught herein, the cathode porosity is about 25% or less by volume (e.g., about 25, 24, 23, 22, 21, 20, 19, 18, 17, 16, 15, 14, 13, 12, 11, or 10% or less by volume).

In certain embodiments as otherwise taught herein, the cathode porosity after calendering is from about 40% to 7% porosity (e.g., about 40, 39, 38, 37, 36, 35, 34, 33, 32, 31, 30, 29, 28, 27, 26, 25, 24, 23, 22, 21, 20, 19, 18, 17, 16, 15, 14, 13, 12, 11, 10, 9, 8, or 7% by volume).

In certain embodiments as otherwise taught herein, the cathode porosity before calendering is from about 30% to 60% porosity (e.g., about 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60% by volume).

In certain embodiments as otherwise taught herein, the metal substrate does not have edge defects. In certain embodiments, provided herein is the bilayer as otherwise taught herein, where the cathode does not have edge defects.

In certain embodiments as otherwise taught herein, the metal substrate does not have substantial edge defects. In certain embodiments, provided herein is the bilayer as otherwise taught herein, where the cathode does not have substantial edge defects.

In certain embodiments as otherwise taught herein, the cathode has a variance in surface flatness (e.g., per cm²) of less than or equal to about 50 µm (e.g., about 50, 45, 40, 35, 30, 25, 20, 15, 10, or 5 µm). In certain embodiments, the variance in surface flatness is between about 50 and 5 µm (e.g., about 50, 45, 40, 35, 30, 25, 20, 15, 10, or 5 µm). In certain embodiments, the variance in surface flatness is between about 40 and 10 µm (e.g., about 40, 35, 30, 25, 20, 15, or 10 µm).

In certain embodiments as otherwise taught herein, the cathode has a surface flatness of from about 1 to 50 µm per cm² (e.g., about 50, 45, 40, 35, 30, 25, 20, 15, 10, or 5 µm). In certain embodiments, the cathode has a surface flatness of less than or equal to about 50 µm per cm² (e.g., about 50, 45, 40, 35, 30, 25, 20, 15, 10, or 5 µm).

In certain embodiments as otherwise taught herein, the metal substrate is an aluminum or aluminum alloy metal substrate. In certain embodiments, the metal substrate is aluminum. In certain embodiments, the metal substrate is an aluminum alloy metal substrate.

In certain embodiments as otherwise taught herein, the metal substrate is a copper or a copper alloy metal substrate. In certain embodiments, the metal substrate is copper. In certain embodiments, the metal substrate is a copper alloy metal substrate.

In certain embodiments as otherwise taught herein, the metal substrate is a nickel or nickel alloy metal substrate. In certain embodiments, the metal substrate is nickel. In certain embodiments, the metal substrate is a nickel alloy metal substrate.

In certain embodiments as otherwise taught herein, the metal substrate has a thickness of from about 8.0 µm to 35 µm (i.e., about 8.0, 8.5, 9.0, 9.5, 10, 11, 12, 13, 14, 15, 16, 17, 18, 19, 20, 21, 22, 23, 24, 25, 26, 27, 28, 29, 30, 31, 32, 33, 34, or 35 µm) .

In certain embodiments as otherwise taught herein, the metal substrate has a width of from about 5.0 mm to 400 mm (i.e., about 5.0, 5.25, 5.5, 5.75, 6, 6.5, 7, 7.5, 8, 8.5, 9, 9.5, 10, 11, 12, 13, 14, 15, 16, 17, 18, 19, 20, 21, 22, 23, 24, 25, 27.5, 30, 32.5, 35, 37.5, 40, 42.5, 45, 47.5, 50, 55, 60, 65, 70, 75, 80, 85, 90, 95, 100, 105, 110, 115, 120, 125, 130, 140, 150, 160, 170, 175, 180, 190, 200, 210, 220, 225, 230, 240, 250, 260, 270, 275, 280, 290, 300, 310, 320, 325, 330, 340, 350, 360, 370, 375, 380, 390, or 400 mm).

In certain embodiments as otherwise taught herein, the metal substrate has a length of from about 12 cm to 1000 cm (i.e., about 12, 13, 14, 15, 16, 17, 18, 19, 20, 21, 22, 23, 24, 25, 27.5, 30, 32.5, 35, 37.5, 40, 42.5, 45, 47.5, 50, 55, 60, 65, 70, 75, 80, 85, 90, 95, 100, 105, 110, 115, 120, 125, 130, 140, 150, 160, 170, 175, 180, 190, 200, 210, 220, 225, 230, 240, 250, 260, 270, 275, 280, 290, 300, 310, 320, 325, 330, 340, 350, 360, 370, 375, 380, 390, 400, 425, 450, 475, 500, 525, 550, 575, 600, 625, 650, 675, 700, 725, 750, 775, 800, 825, 850, 875, 900, 925, 950, 975, or 1000 cm). In certain embodiments, the metal substrate has a length of from about 1.0 m to 1000 m (i.e., about 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10, 11, 12, 13, 14, 15, 16, 17, 18, 19, 20, 21, 22, 23, 24, 25, 27.5, 30, 32.5, 35, 37.5, 40, 42.5, 45, 47.5, 50, 55, 60, 65, 70, 75, 80, 85, 90, 95, 100, 105, 110, 115, 120, 125, 130, 140, 150, 160, 170, 175, 180, 190, 200, 210, 220, 225, 230, 240, 250, 260, 270, 275, 280, 290, 300, 310, 320, 325, 330, 340, 350, 360, 370, 375, 380, 390, 400, 425, 450, 475, 500, 525, 550, 575, 600, 625, 650, 675, 700, 725, 750, 775, 800, 825, 850, 875, 900, 925, 950, 975, or 1000 m).

In certain embodiments as otherwise taught herein, the metal substrate is bare (i.e., not coated). In certain embodiments, the metal substrate has a carbon coating on one side. In certain embodiments, the metal substrate has a carbon coating on both sides.

In certain embodiments as otherwise taught herein, the carbon coating includes carbon black, graphite, graphene, acetylene black, furnace black, ketjen black, single-wall carbon nanotubes, multiwall carbon nanotubes, or a combination thereof.

In certain embodiments as otherwise taught herein, the carbon coating has a surface area of from about 5 to 4000 m²/g (e.g., about 5, 6, 7, 8, 9, 10, 11, 12, 13, 14, 15, 16, 17, 18, 19, 20, 22.5, 25, 27.5, 30, 32.5, 35, 37.5, 40, 42.5, 45, 47.5, 50, 55, 60, 65, 70, 75, 80, 85, 90, 95, 100, 105, 110, 115, 120, 125, 130, 140, 150, 160, 170, 175, 180, 190, 200, 210, 220, 225, 230, 240, 250, 275, 300, 325, 350, 375, 400, 425, 450, 475, 500, 525, 550, 575, 600, 625, 650, 675, 750, 800, 850, 900, 950, 1000, 1050, 1100, 1150, 1200, 1250, 1300, 1350, 1400, 1450, 1500, 1600, 1700, 1750, 1800, 1900, 2000, 2100, 2200, 2250, 2300, 2400, 2500, 2600, 2700, 2750, 2800, 2900, 3000, 3100, 3200, 3250, 3300, 3400, 3500, 3600, 3700, 3750, 3800, 3900, or 4000 m²/g).

In certain embodiments as otherwise taught herein, the metal substrate carbon coating has a thickness of from about 0.5 µm to 7.0 µm (i.e., about 0.5, 0.6, 0.7, 0.75, 0.8, 0.9, 1.0, 1.1, 1.2, 1.25, 1.3, 1.4, 1.5, 1.6, 1.75, 1.8, 1.9, 2.0, 2.25, 2.5, 2.75, 3.0, 3.25, 3.5, 3.75, 4.0, 4.25, 4.5, 4.75, 5.0, 5.25, 5.5, 5.75, 6.0, 6.25, 6.5, 6.75, or 7 µm).

In certain embodiments as otherwise taught herein, the metal substrate carbon coating is the same on both sides. In certain embodiments, the metal substrate carbon coating is different on each side.

The metal substrate carbon coating can be of any width and any length less than or equal to the width and length of the metal substrate. In certain embodiments as otherwise taught herein, the carbon coating is the same width as the metal substrate. In certain embodiments, the carbon coating width is shorter than the metal substrate width. In certain embodiments, the carbon coating is the same length as the metal substrate. In certain embodiments, the carbon coating length is shorter than the metal substrate length.

In certain embodiments as otherwise taught herein, where the metal substrate with carbon coating or coatings has a thickness of from about 8.0 µm to 40 µm (i.e., about 8.0, 8.5, 9.0, 9.5, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 µm).

In certain embodiments as otherwise taught herein, a sulfide solid electrolyte, an oxide solid electrolyte, or the like can be included in the positive electrode active material layer. For example, a mixture of Li₂S:P₂S₅ can be included in as the sulfide solid electrolyte.

In certain embodiments as otherwise taught herein, the surface of the positive electrode active material may be coated with a solid electrolyte, such as an electrically conductive material (e.g., acetylene black or the like), a binder (e.g., polyvinylidene fluoride or the like), or the like.

In certain embodiments as otherwise taught herein, the material for the cathode is prepared by mixing (e.g., kneading) of the components of the cathode with a solvent to form a paste, then to apply the paste onto the positive electrode current collector. The paste is then dried, and the material in the positive electrode is pressed (e.g., by calendering) to increase its density.

In certain embodiments as otherwise taught herein, the thickness of the positive electrode active material layer after pressing is, e.g., about 5 to 250 µm; preferably, about 10 to 100 µm or about 20 to 50 µm, such as about 20, 25, 30, 35, 40, 45, or 50 µm).

In certain aspects and embodiments, provided herein is a green bilayer including
a metal substrate having at least two longitudinal edges and at least two transverse edges; and
a cathode material disposed on the metal substrate; and
where the longitudinal edges comprise one or more cuts that extend from a longitudinal edge toward the cathode material.

In certain embodiments as otherwise taught herein, the cathode material covers at least about 50% of the surface of the metal substrate, but does not cover the longitudinal edges.

In certain embodiments as otherwise taught herein, the green bilayer comprises at least three lanes of coating material disposed on the metal substrate; and wherein a first and a second lane of the coating material comprise the cathode material.

In certain aspects and embodiments as otherwise disclosed herein, the cuts are periodically spaced.

In certain aspects and embodiments as otherwise disclosed herein, the cathode material covers at least one or more transverse edges.

In certain aspects and embodiments as otherwise disclosed herein, the cuts have a T-shape.

In certain aspects and embodiments as otherwise disclosed herein, the metal substrate has one or more perforations or indentations shaped as one or more battery tabs.

In certain embodiments as otherwise taught herein, the cathode further includes one or more slits. In certain embodiments, the slits include an I-shape, an L-shape, a T-shape, or combinations thereof. In certain embodiments, the slits have an I-shape. In certain embodiments, the slits have an L-shape. In certain embodiments, the slits have a T-shape.

In certain embodiments as otherwise taught herein, the cuts include one or more geometric shapes. In certain embodiments, the geometric shapes include a triangle, a semicircle, an arch, a trapezoid, a parallelogram, or combinations thereof. In certain embodiments, the geometric shapes include a triangle. In certain embodiments, the geometric shapes include a semicircle. In certain embodiments, the geometric shapes include an arch. In certain embodiments, the geometric shapes include a trapezoid. In certain embodiments, the geometric shapes include a parallelogram, such as a rectangle (e.g., a square).

In certain embodiments as otherwise taught herein, the cuts include one or more slits and one or more geometric shapes (e.g., alternating T-shape slits and rectangles).

In certain embodiments, the cuts on the two edges are not offset. In certain embodiments, the cuts on the two edges are offset.

In certain embodiments as otherwise disclosed herein, the cathode material thickness is about 100 µm to 250 µm (e.g., about 150 to 275 µm, about 175 to 250 µm, about 190 to 240 µm, or about 200 to 250 µm). In certain embodiments, the cathode material thickness is less than about 250 µm. In certain embodiments, the cathode material thickness is less than about 200 µm. In certain embodiments, the cathode material thickness is less than about 150 µm.

In certain embodiments as otherwise disclosed herein, the cathode does not have substantial edge defects.

In certain aspects and embodiments as otherwise disclosed herein, edge defects are selected from the group consisting of a crack, a bend, a warp, a wrinkle, a delamination, and combinations thereof.

In certain embodiments, the cathode material of the bilayer is disposed on the metal substrate in two lanes. In certain embodiments, the cathode material of the bilayer is disposed on the metal substrate in three lanes. In certain embodiments, the cathode material of the bilayer is disposed on the metal substrate in four or more lanes.

In certain embodiments, the lanes are continuous. In certain embodiments the lanes are discontinuous (e.g., patch coating). In certain embodiments, the lanes are parallel to the longitudinal edges. In certain embodiments, the cathode material of the bilayer is disposed in two broad outer lanes and a narrow middle lane.

In certain embodiments as otherwise taught herein, the cathode material covers at least about 50% of the surface of the metal substrate, but does not cover the longitudinal edges.

In certain embodiments as otherwise taught herein, the green bilayer comprises at least three lanes of coating material disposed on the metal substrate; and wherein a first and a second lane of the coating material comprise the cathode material.

In certain aspects and embodiments as otherwise taught herein, provided herein is a bilayer including:
a metal substrate having at least two longitudinal edges and at least two transverse edges;
at least three lanes of coating material disposed on the metal substrate;
wherein a first and a second lane of coating material include cathode material.

In certain aspects and embodiments as otherwise taught herein, provided herein is a bilayer including:
a metal substrate having at least two longitudinal edges and at least two transverse edges;
at least three lanes of coating material disposed on the metal substrate;

wherein a first and a second lane of coating material include cathode material; and
wherein the longitudinal edges comprise one or more cuts that extend from a longitudinal edge toward the coating material.

In certain embodiments as otherwise taught herein, the cathode material covers at least about 50% of the surface of the metal substrate, but does not cover the longitudinal edges.

In certain embodiments as otherwise taught herein, the bilayer comprises at least three lanes of coating material disposed on the metal substrate; and wherein a first and a second lane of the coating material comprise the cathode material.

In certain aspects and embodiments as otherwise taught herein, provided herein is a green bilayer including:
a metal substrate having at least two longitudinal edges and at least two transverse edges;
at least three lanes of coating material disposed on the metal substrate;
wherein a first and a second lane of coating material include cathode material.

In certain aspects and embodiments as otherwise taught herein, provided herein is a green bilayer including:
a metal substrate having at least two longitudinal edges and at least two transverse edges;
at least three lanes of coating material disposed on the metal substrate;

wherein a first and a second lane of coating material include cathode material; and
wherein the longitudinal edges comprise one or more cuts that extend from a longitudinal edge toward the coating material.

In certain embodiments as otherwise taught herein, the cathode material covers at least about 50% of the surface of the metal substrate, but does not cover the longitudinal edges.

In certain embodiments as otherwise taught herein, the green bilayer comprises at least three lanes of coating material disposed on the metal substrate; and wherein a first and a second lane of the coating material comprise the cathode material.

In certain embodiments, provided herein is the bilayer or green bilayer as otherwise disclosed herein, wherein a third lane of coating material includes cathode material. In certain embodiments, a third lane of coating material does not include cathode material. In certain embodiments, the three lanes of coating material are identical in composition. In certain embodiments, the three lanes of coating material are not identical in composition.

In certain embodiments, provided herein is a metal foil including two longitudinal edges and two transverse edges and coated with a coating material; wherein the coating material does not coat the longitudinal edges; wherein the coating material is spaced by parallel, or nearly parallel, exposed metal foil; and wherein the longitudinal edges comprise one or more cuts that extend from a longitudinal edge toward the coating material.

In certain embodiments, at least 50% of the surface of the metal foil is coated by the coating material.

In certain embodiments, the first and third lane are deposited from 1 to 5 mm (e.g., about 0.5, 0.75, 1.0, 1.5, 2.0, 2.5, 3.0, 3.5, 4.0, 4.5, or 5.0 mm) from the longitudinal edge exclusive of any tab features on the longitudinal edge.

In certain embodiments, the material is coated to have a uniform average thickness of from 150 µm to 500 µm (e.g., about 150, 175, 200, 225, 250, 275, 300, 325, 350, 375, 400, 425, 450, 475, or 500 µm) before calendering. In certain embodiments, after calendering, the material has a uniform average thickness of from 100 µm to 500 µm, 150 µm to 400 µm, 150 µm to 300 µm, or 150 µm to 250 µm.

In certain embodiments, the coating material has a uniform average thickness.

In certain embodiments, the at least three lanes of material disposed on the metal substrate have an average thickness that is within 10-20% (e.g., 5%, 7.5%, 10%, 12.5%, 15% 17.5%, or 20%) of each other.

### Processes of Preparation

Provided herein are methods (i.e., processes) for preparing the bilayer compositions as set forth by the instant application.

In certain embodiments, the bilayer compositions can be formed as described herein and used for the preparation of lithium-ion batteries, lithium batteries, solid-state lithium batteries and their components. Examples of such batteries and their components are found, for example, in PCT App. Nos. PCT/US2021/049528 and PCT/US2022/053080.

In certain aspects, provided herein is a process of making a cathode, including:
providing a bilayer comprising:
a metal substrate having longitudinal edges and transverse edges; and
a cathode material disposed on the metal substrate;
   wherein the longitudinal edges comprise one or more cuts that extend from the longitudinal edge to the cathode material disposed on the metal substrate; and calendering the bilayer.

In certain embodiments as otherwise taught herein, the cathode material covers at least about 50% of the surface of the metal substrate, but does not cover the longitudinal edges.

In certain embodiments as otherwise taught herein, the green bilayer comprises at least three lanes of coating material disposed on the metal substrate; and wherein a first and a second lane of the coating material comprise the cathode material.

In certain embodiments, the bilayer is not calendered. ("green"). As used herein, green refers to a bilayer before it is calendered. In certain embodiments, a green bilayer is not (or is not yet) baked, calcined, or sintered.

In certain embodiments, provided herein is the process as otherwise taught herein, further including die punching the bilayer.

In certain embodiments, provided herein is the process as otherwise taught herein, further including heating the bilayer. High temperatures are used in the industry to achieve high density and low porosity cathodes. See, for example,
Current and future lithium-ion battery manufacturing (cell.com)
(https://www.cell.com/iscience/pdf/S2589-0042(21)00300-X.pdf);
Investigation of the Adhesion Strength along the Electrode Manufacturing Process for Improved Lithium-Ion Anodes - Billot - 2020 - Energy Technology - Wiley Online Library (https://onlinelibrary. wiley.com/doi/10.1002/ente.201801136); and
Calendering of Li(Ni_{0.33}Mn_{0.33}Co_{0.33})O₂-Based Cathodes: Analyzing the Link Between Process Parameters and Electrode Properties by Advanced Statistics - Primo - 2021 - Batteries & Supercaps - Wiley Online Library (https://chemistry-europe.onlinelibrary.wiley.com/doi/10.1002/batt.202000324).

In certain embodiments, the present disclosure provides methods of preparing the cathode at temperatures lower than those typically used in the field. In certain embodiments, the green bilayer of the present disclosure is calendered at a temperature of less than 100 °C (e.g., about 100, 95, 90, 85, 80, 75, 70, 65, 60, 55, 50, 45, 40, 35, 30, 25, or 20 °C). In certain embodiments, the green bilayer is calendered at a temperature of less than 75 °C (e.g., about 75, 70, 65, 60, 55, 50, 45, 40, 35, 30, 25, or 20 °C). In certain embodiments, the green bilayer is calendered at a temperature of less than 50 °C (e.g., about 50, 45, 40, 35, 30, 25, or 20 °C). In certain embodiments, the green bilayer is calendered at a temperature from 30 °C to 100 °C (e.g., about 100, 95, 90, 85, 80, 75, 70, 65, 60, 55, 50, 45, 40, 35, or 30 °C), from 40 °C to 90 °C (e.g., about 90, 85, 80, 75, 70, 65, 60, 55, 50, 45, or 40 °C), or from 50 °C to 75 °C (e.g., about 75, 70, 65, 60, 55, or 50 °C).

In certain embodiments of the process as otherwise taught herein, the calendering the bilayer uses two active rollers. In certain embodiments, the calendering the bilayer uses one active roller.

In certain embodiments of the process as otherwise taught herein, the calendering the bilayer is sheet by sheet. In certain embodiments, the calendering the bilayer is roll to roll (e.g., with a winder/rewinder).

In certain embodiments of the process as otherwise taught herein, the calendering the bilayer is at a pressure of at least about 50 MPa (e.g., at least about 50, 55, 60, 65, 70, 75, 80, 85, 90, 95, or 100 MPa).

In certain embodiments of the process as otherwise taught herein, the calendering the bilayer is at a pressure of from about 150 MPa to 2000 MPa (e.g., about 150, 160, 175, 200, 225, 250, 275, 300, 325, 350, 375, 400, 450, 500, 550, 600, 650, 700, 750, 800, 850, 900, 950, 1000, 1100, 1200, 1250, 1300, 1400, 1500, 1600, 1700, 1750, 1800, 1900, or 2000 MPa).

In certain embodiments of the process as otherwise taught herein, the calendering the bilayer is at a speed of from about 0.1 m/s to 50 m/s (e.g., about 0.1, 0.15, 0.2, 0.25, 0.3, 0.35, 0.4, 0.45, 0.5, 0.6, 0.7, 0.8, 0.9, 1.0, 1.25, 1.5, 1.75, 2.0, 2.25, 2.5, 2.75, 3.0, 3.25, 3.5, 3.75, 4.0, 4.25, 4.5, 4.75, 5, 5.5, 6, 6.5, 7, 7.5, 8, 8.5, 9, 9.5, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 m/s).

In certain embodiments of the process as otherwise taught herein, the bilayer is subjected to calendering once. In certain embodiments of the process as otherwise taught herein, the bilayer is subjected to calendering more than once (e.g., twice). In certain embodiments, the calendering conditions are the same. In certain embodiments, the calendering conditions are different.

In certain embodiments of the process as otherwise taught herein, the cathode has an active material loading of at least about 25 mg/cm². In some embodiments, the cathode has an active material loading of at least about 26 mg/cm², 27 mg/cm², 28 mg/cm², 29 mg/cm², or 30 mg/cm².

In certain embodiments of the process as otherwise taught herein, the cathode thickness is reduced from about 240 µm to 190 µm (e.g., about 300 to 240, about 275 to 220, about 250 to about 200 µm, about 200 to 160 µm, about 175 to 140 µm, or about 200 to 250 µm).

In certain embodiments of the process as otherwise taught herein, the cathode porosity is reduced to about 25% or less (e.g., about 25, 24, 23, 22, 21, 20, 19, 18, 17, 16, 15, 14, 13, 12, 11, or 10% or less by volume).

In certain embodiments as otherwise taught herein, the cathode after calendering has a variance in surface flatness of less than or equal to about 50 µm (e.g., about 50, 45, 40, 35, 30, 25, 20, 15, 10, or 5 µm). In certain embodiments, the variance in surface flatness is between about 50 and 5 µm (e.g., about 50, 45, 40, 35, 30, 25, 20, 15, 10, or 5 µm). In certain embodiments, the variance in surface flatness is between about 40 and 10 µm (e.g., about 40, 35, 30, 25, 20, 15, or 10 µm).

In certain embodiments as otherwise taught herein, the cathode active material is a material set forth in International Patent Application Publication No. PCT/US2021/049528, filed September 8, 2021, and titled CATHODE COATING, the entire contents of which are herein incorporated by reference in its entirety for all purposes.

In certain embodiments as otherwise taught herein, the cathode includes a cathode active material selected from manganese oxide, iron oxides, copper oxides, nickel oxides, lithium-manganese complex oxides, lithium-nickel complex oxides, lithium-cobalt complex oxides, lithium cobalt nickel oxides, lithium-manganese-cobalt complex oxides, spinel-phase lithium-manganese-nickel complex oxides, lithium phosphates having an olivine structure, lithium phosphates having a NASICON-type structure, iron (III) sulfate, vanadium oxides, and a combination thereof.

In certain embodiments as otherwise taught herein, the cathode active material is selected from MnO, LiₓMn₂O₄, Liₓ MnO₂, LiₓNiO₂, LiₓCoO₂, LiNi_{(1-y)}Co_{y}O₂, LiMn_{y}Co_{(1-y)}O₂, LiₓMn_{(2-y)}Ni_{y}O₄, LiₓFePO₄, LiₓFe_{(1-y)}Mn_{y}PO₄, Liₓ CoPO₄, Li₇V₂(PO₄)₃, Fe₂(SO₄)₃, V₂O₅, and a combination thereof; wherein 1≤x≤5 and 0≤y≤1.

In certain embodiments as otherwise taught herein, the cathode active material is selected from LiMPO₄ (M=Fe, Ni, Co, Mn); LiₓTi_{y}O_{z}, wherein x is from 0 to 8, y is from 1 to 12, z is from 1 to 24; LiMn₂ₐNiₐO₄, wherein a is from 0 to 2; a nickel cobalt aluminum oxide; LiNiₓMn_{y}Co_{z}O₂, x+y+z=1, 0≤x≤1, 0≤y≤1, and 0≤z≤1; and LiNiₓCo_{y}Al_{z}O₂, wherein x+y+z=1, and 0≤x≤1, 0≤y≤1, and 0≤z≤1.

In certain embodiments as otherwise taught herein, the cathode active material is LiNiₓMn_{y}Co_{z}O₂ (NMC), x+y+z=1, 0≤x≤1, 0≤y≤1, and 0≤z≤1 and wherein x+y+z=1.

In certain embodiments as otherwise taught herein, the cathode active material is LiNiₓMn_{y}Co_{z}O₂, x is 0.8, y is 0.1, and z is 0.1.

In certain embodiments as otherwise taught herein, the cathode active material is LiNiₓMn_{y}Co_{z}O₂, x is 0.6, y is 0.2, and z is 0.2.

In certain embodiments as otherwise taught herein, the cathode active material is LiNiₓMn_{y}Co_{z}O₂, x is 0.5, y is 0.3, and z is 0.2.

In certain embodiments as otherwise taught herein, the cathode active material is LiNiₓMn_{y}Co_{z}O₂, x is 1/3, y is 1/3, and z is 1/3.

In certain embodiments as otherwise taught herein, the cathode active material is Li(NiCoMn)O₂.In certain embodiments as otherwise taught herein, the cathode active material is NMC, NCA, NMO, LCO, LFP, or combinations thereof.

In certain embodiments as otherwise taught herein, the cathode active material is LiFePO₄.

In certain embodiments as otherwise taught herein, the NMC has a d₅₀ particle size, S, of 0.1 µm<S<50 µm. In certain embodiments, the NMC has a d₅₀ particle size, S, of 0.5 µm <S<30 µm. In certain embodiments, the NMC has a d₅₀ particle size, S, of 1 µm <S<20 µm.

In certain embodiments, including any of the foregoing, set forth herein is a thin sheet comprising a cathode bilayer as set forth herein.

In certain embodiments, including any of the foregoing, set forth herein is a thin sheet comprising a cathode bilayer as set forth herein. In certain embodiments, the cathode material is casted on aluminum foil (e.g., Armor) that is 100 m long by 260 mm wide by 18 µm thick. In certain embodiments, this length, width, and thickness is varied according to need. In certain embodiments, the thickness can also be varied for a different substrate or different aluminum foil.

In certain embodiments as otherwise taught herein, the cathode active loading in the cathode is between about 1 and 15 mAh/cm² (e.g., 1, 2, 3, 4, 5, 6, 7, 8, 9, 10, 11, 12, 13, 14, or 15 mAh/cm²). In certain embodiments, including any of the foregoing, the cathode active loading is at least about 5 mAh/cm².

In certain embodiments as otherwise taught herein, the cathode has a thickness of 120 µm. In certain embodiments, including any of the foregoing, the cathode has a thickness of 150 µm.

In certain embodiments as otherwise taught herein, the cathode is at least 5 centimeters (cm) in width. In certain embodiments, the cathode is at least 1 meter (m) in width.

In certain embodiments as otherwise taught herein, the cathode is at least 10 cm in length. In certain embodiments, including any of the foregoing, the cathode is at least 70 cm in length. In certain embodiments, including any of the foregoing, the cathode is at least about 1 m in length.

In certain embodiments as otherwise taught herein, the cathode is about 100 mm x 2,000 mm.

In certain embodiments as otherwise taught herein, the cathode is about 150 mm x 100 m.

In certain embodiments as otherwise taught herein, the cathode is about 300 mm x a continuous roll.

In certain embodiments as otherwise taught herein, the metal layer is a layer of Al.

In certain embodiments as otherwise taught herein, the metal layer is a layer of Ni.

In certain embodiments, the solid-phase positive electrode as otherwise set forth in the present disclosure may be part of a solid-state battery. In certain embodiments, such a battery is useful as a power source for an electronic device or a vehicle battery.

In certain aspects and embodiments, provided herein is a process of making a cathode, the process including:
providing a green bilayer including:
a metal substrate having at least two longitudinal edges and at least two transverse edges; and
a cathode material disposed on the metal substrate;
   wherein the cathode material covers at least about 50% of the surface of the metal substrate, but does not cover the longitudinal edges; and
   wherein the longitudinal edges comprise one or more cuts that extend from a longitudinal edge to the cathode material disposed on the metal substrate; and calendering the green bilayer.

In certain aspects and embodiments, provided herein is a process of making a cathode, including:
coating a metal substrate with a cathode slurry to provide a green bilayer with a cathode material disposed on the metal substrate,
   wherein the metal substrate has at least two longitudinal edges and at least two transverse edges;
   wherein the cathode material covers at least about 50% of the surface of the metal substrate, but does not cover the longitudinal edges; and
calendering the bilayer; and
die punching the green bilayer to produce the cathode.

In certain embodiments of the process as otherwise described herein, the process further includes using a laser pattern to prepare the green bilayer for later die punching.

In certain embodiments, the using a laser pattern is done simultaneously on both sides so that there is no offset in the resulting cuts or tabs. In certain embodiments, the using a laser pattern is not simultaneous on both sides.

In certain embodiments of the process as otherwise described herein, the process further includes cutting the metal substrate; wherein the longitudinal edges comprise one or more cuts that extend from a longitudinal edge to the cathode material disposed on the metal substrate.

In certain embodiments of the process as otherwise described herein, the process further includes cutting the metal substrate; wherein the cutting includes one or more cuts on longitudinal edges, and wherein the one or more cuts extend from a longitudinal edge to a cathode material disposed on the metal substrate.

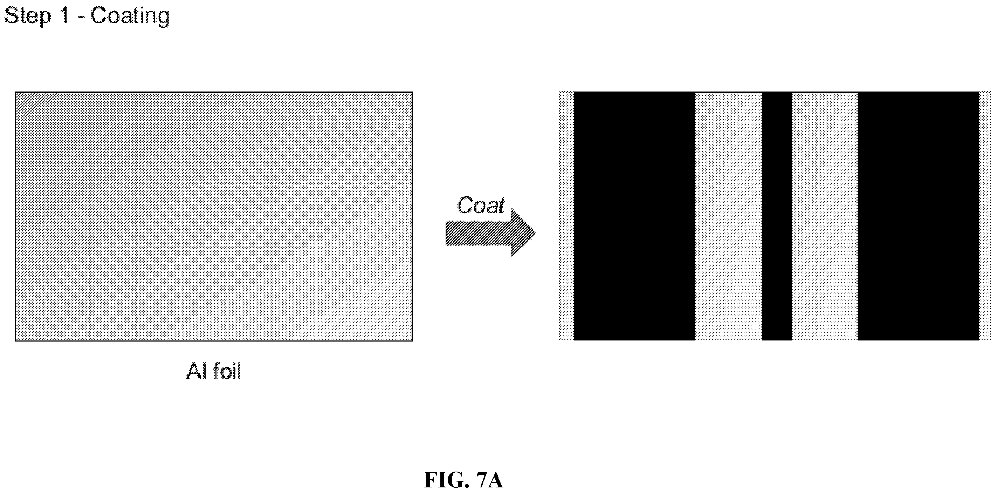

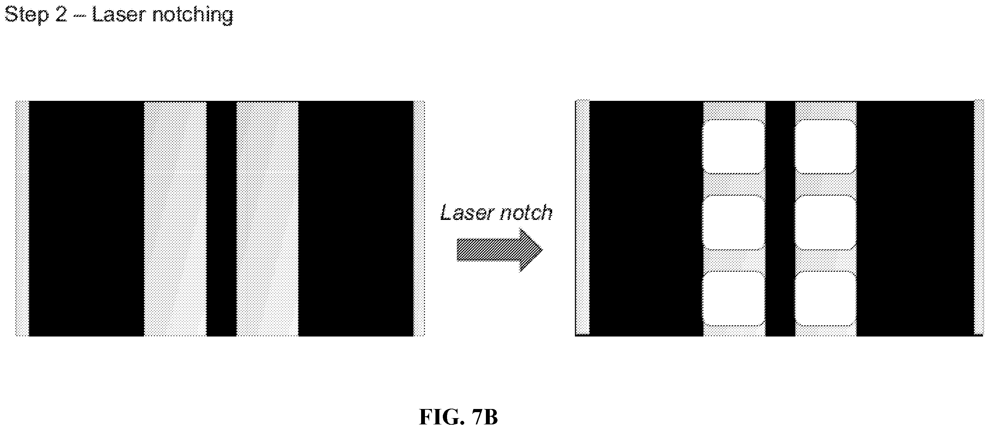

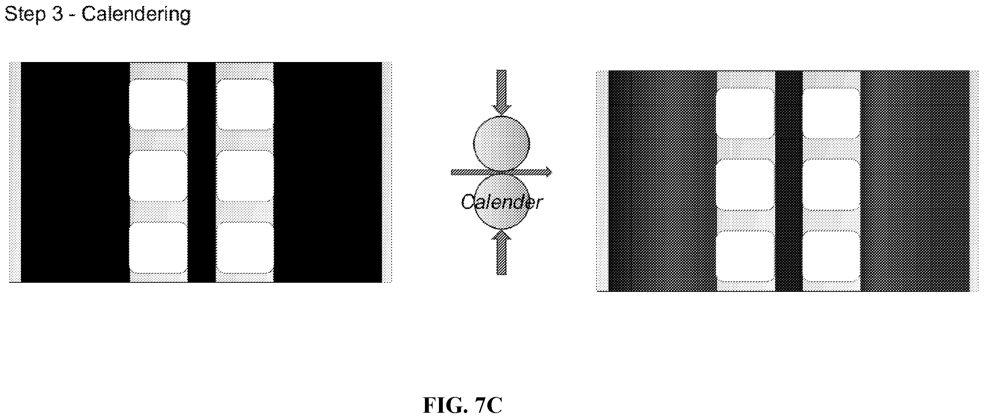

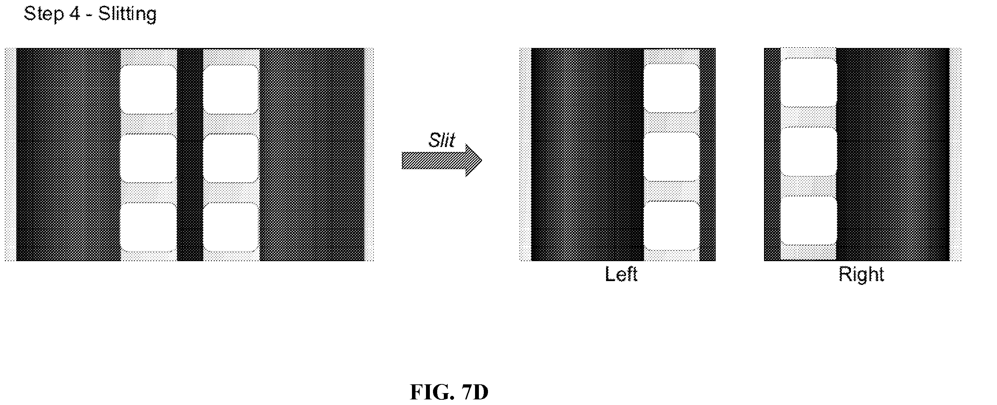

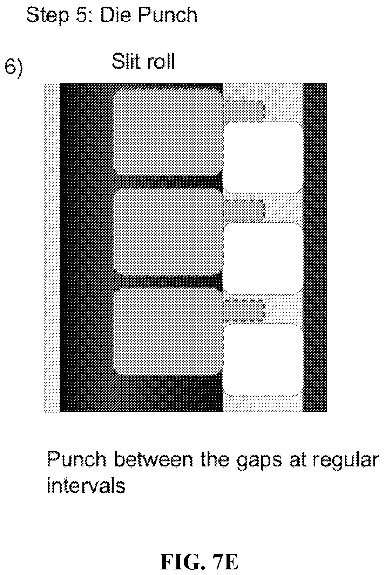

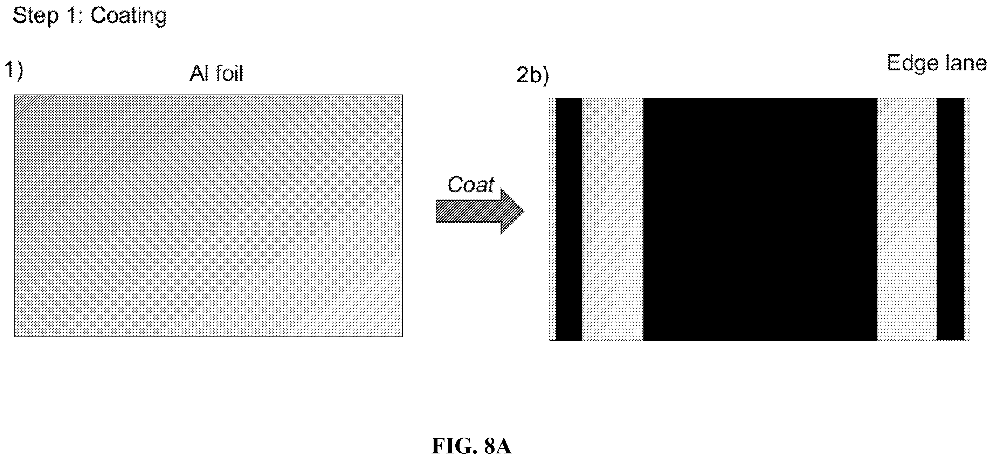

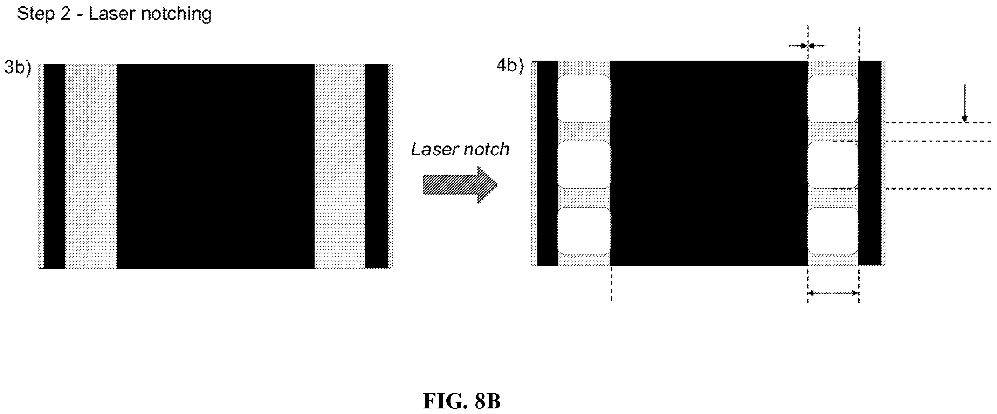

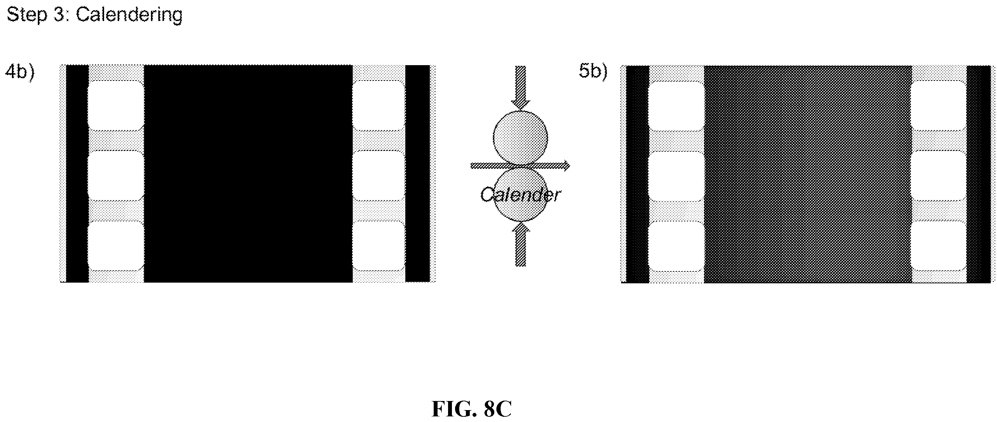

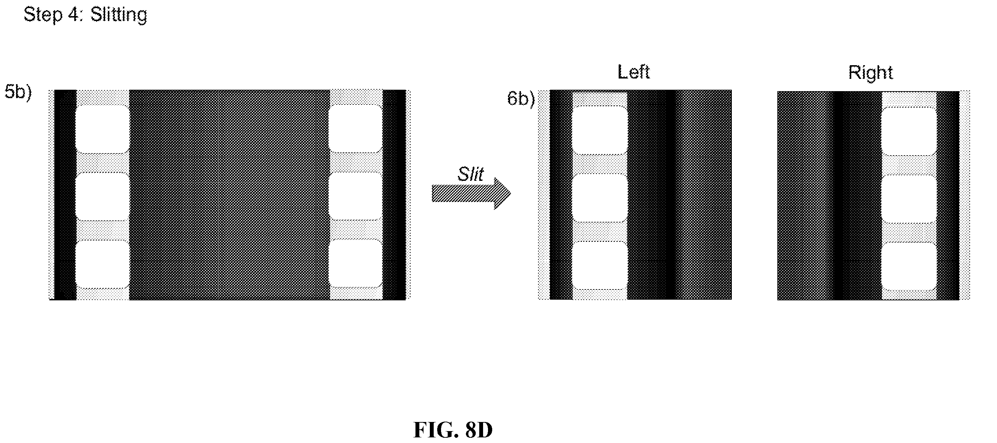

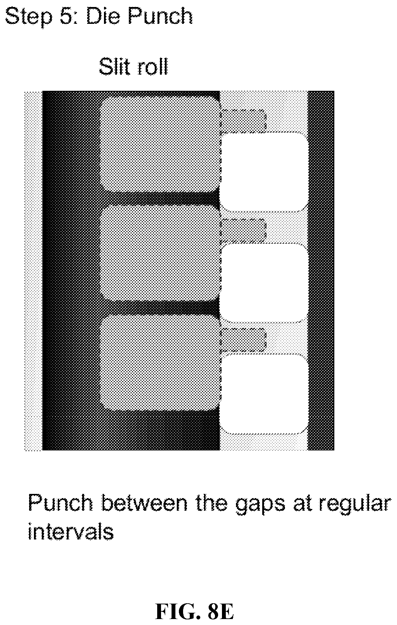

In certain embodiments of the process as otherwise described herein, the process further includes cutting the metal substrate; wherein the cutting includes one or more cuts on transverse edges. In certain embodiments as otherwise described herein, the one or more cuts extend from a transverse edge to a second transverse edge (e.g., FIGS. 7D and 8D). In certain embodiments, the one or more cuts are substantially parallel to the longitudinal edges.

In certain embodiments of the process as otherwise described herein, the cutting the metal substrate is at a speed of from about 0.1 m/s to 100 m/s (e.g., about 0.1, 0.15, 0.2, 0.25, 0.3, 0.35, 0.4, 0.45, 0.5, 0.6, 0.7, 0.8, 0.9, 1.0, 1.25, 1.5, 1.75, 2.0, 2.25, 2.5, 2.75, 3.0, 3.25, 3.5, 3.75, 4.0, 4.25, 4.5, 4.75, 5, 5.5, 6, 6.5, 7, 7.5, 8, 8.5, 9, 9.5, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 m/s).

In certain embodiments of the process as otherwise described herein, the using the laser pattern precedes the calendering of the bilayer. In certain embodiments, the using the laser pattern precedes the cutting the metal substrate. In certain embodiments, the using the laser pattern precedes the cutting the metal substrate and the calendering of the bilayer.

In certain embodiments of the process as otherwise described herein, the cutting the metal substrate precedes the using the laser pattern. In certain embodiments, the cutting the metal substrate precedes the calendering of the bilayer. In certain embodiments, the cutting the metal substrate precedes the using the laser pattern and the calendering of the bilayer.

In certain embodiments of the process as otherwise described herein, the cutting of the metal substrate precedes the calendering of the bilayer. In certain embodiments, the calendering of the bilayer precedes the cutting of the metal substrate.

### Exemplary Embodiments

Embodiment 1. A metal foil comprising two longitudinal edges and two transverse edges and coated with a coating material; wherein the coating material does not coat the longitudinal edges; wherein the coating material is spaced by parallel, or nearly parallel, exposed metal foil; and wherein the longitudinal edges comprise one or more cuts that extend from a longitudinal edge toward the coating material.

Embodiment 2. The metal foil of embodiment 1, wherein at least 50% of the surface of the metal foil is coated by the coating material.

Embodiment 3. The metal foil of embodiment 1 or 2, wherein the first and third lane are deposited 1 mm, 2 mm, 3 mm, 4 mm, or 5 mm from the longitudinal edge exclusive of any tab features on the longitudinal edge.

Embodiment 4. The metal foil of any one of embodiments 1-3, wherein the material is coated to have a uniform average thickness of from 150 µm to 250 µm after calendering.

Embodiment 5. The metal foil of any one of embodiments 1-4, wherein the coating material has a uniform average thickness.

Embodiment 6. The metal foil of any one of embodiments 1-5, wherein the at least three lanes of material disposed on the metal substrate have an average thickness that is within 10-20% of each other.

Embodiment 7. A bilayer comprising:
a metal substrate having at least two longitudinal edges and at least two transverse edges;
at least three lanes of coating material disposed on the metal substrate;

wherein a first and a second lane of coating material comprise cathode material,
wherein the coating material covers at least about 50% of the surface of the metal substrate but does not cover the longitudinal edges; and
wherein the longitudinal edges comprise one or more cuts that extend from a longitudinal edge toward the coating material.

Embodiment 8. The bilayer of embodiment 7, wherein the at least three lanes of material disposed on the metal substrate have a uniform average thickness.

Embodiment 9. The bilayer of embodiment 7 or 8, wherein the metal substrate having at least two longitudinal edges and at least two transverse edges is a metal foil.

Embodiment 10. The bilayer of any one of embodiments 7-9, wherein the at least three lanes of material disposed on the metal substrate have an average thickness that is within 10-20% of each other.

Embodiment 11. The bilayer of any one of embodiments 7-10, wherein a third lane of coating material comprises cathode material.

Embodiment 12. The bilayer of any one of embodiments 7-10, wherein a third lane of coating material does not comprise cathode material.

Embodiment 13. The bilayer of any one of embodiments 7-11, wherein the three lanes of coating material are identical in composition.

Embodiment 14. The bilayer of any one of embodiments 7-12, wherein the three lanes of coating material are not identical in composition.

Embodiment 15. The bilayer of any one of embodiments 7-14, wherein the first and third lanes are deposited from 1 to 5 mm from the longitudinal edge exclusive of any tab feature.

Embodiment 16. The bilayer of any one of embodiments 7-15, wherein the cuts are periodically spaced.

Embodiment 17. The bilayer of any one of embodiments 7-15, wherein the cuts are not periodically spaced.

Embodiment 18. The bilayer of any one of embodiments 7-17, wherein the cuts are present on both longitudinal edges.

Embodiment 19. The bilayer of any one of embodiments 7-18, wherein the cathode material covers the substrate as patches.

Embodiment 20. The bilayer of any one of embodiments 7-19, wherein the cathode material covers at least one or more transverse edges.

Embodiment 21. The bilayer of any one of embodiments 7-20, wherein the cathode material further comprises a center cut parallel to the longitudinal edge.

Embodiment 22. The bilayer of any one of embodiments 7-21, wherein the cuts comprise one or more slits.

Embodiment 23. The bilayer of embodiment 22, wherein the slits comprise an **I-**shape, an L-shape, a T-shape, or combinations thereof.

Embodiment 24. The bilayer of embodiment 22, wherein the slits have a T-shape.

Embodiment 25. The bilayer of any one of embodiments 7-21, wherein the cuts comprise one or more geometric shapes.

Embodiment 26. The bilayer of embodiment 25, wherein the geometric shapes comprise a triangle, a semicircle, an arch, a trapezoid, a parallelogram, or combinations thereof.

Embodiment 27. The bilayer of embodiment 25, wherein the geometric shapes comprise a parallelogram, and wherein the parallelogram is a rectangle.

Embodiment 28. The bilayer of any one of embodiments 7-27, wherein the cuts comprise one or more slits and one or more geometric shapes.

Embodiment 29. The bilayer of any one of embodiments 7-28, wherein the metal substrate has one or more perforations or indentations shaped as one or more battery tabs.

Embodiment 30. The bilayer of any one of embodiments 7-29, wherein the cathode material has a cathode active material loading of at least 27 mg/cm².

Embodiment 31. The bilayer of embodiment 30, wherein the cathode material has a cathode active material loading of at least 28 mg/cm².

Embodiment 32. The bilayer of embodiment 31, wherein the cathode material has a cathode active material loading of at least 29 mg/cm².

Embodiment 33. The bilayer of embodiment 32, wherein the cathode material has a cathode active material loading of at least 30 mg/cm².

Embodiment 34. The bilayer of any one of embodiments 7-33, wherein the cathode material thickness is less than 250 µm.

Embodiment 35. The bilayer of embodiment 34, wherein the cathode material thickness is about 100 µm to 250 µm.

Embodiment 36. The bilayer of embodiment 35, wherein the cathode material thickness is about 190 µm to 240 µm.

Embodiment 37. The bilayer of embodiment 34, wherein the cathode material thickness is less than about 200 µm.

Embodiment 38. The bilayer of embodiment 37, wherein the cathode material thickness is less than about 150 µm.

Embodiment 39. The bilayer of embodiment 38, wherein the cathode material thickness is less than about 100 µm.

Embodiment 40. The bilayer of any one of embodiments 7-39, wherein the cathode material porosity is about 25% or less by volume.

Embodiment 41. The bilayer of any one of embodiments 7-40, wherein the metal substrate does not have substantial edge defects.

Embodiment 42. The bilayer of any one of embodiments 7-41, wherein the cathode does not have substantial edge defects.

Embodiment 43. The bilayer of embodiment 41 or 42, wherein edge defects are selected from the group consisting of a crack, a bend, a warp, a wrinkle, a delamination, and combinations thereof.

Embodiment 44. The bilayer of any one of embodiments 7-43, wherein the cathode has a surface flatness of less than or equal to about 50 µm per cm².

Embodiment 45. The bilayer of embodiment 44, wherein the cathode has a surface flatness of from about 1 to 50 µm².

Embodiment 46. The bilayer of any one of embodiments 7-45, wherein the metal substrate is an aluminum or aluminum alloy metal substrate.

Embodiment 47. The bilayer of embodiment 46, wherein the metal substrate is an aluminum foil.

Embodiment 48. The bilayer of any one of embodiments 7-45, wherein the metal substrate is a copper or copper alloy metal substrate.

Embodiment 49. The bilayer of any one of embodiments 7-45, wherein the metal substrate is a nickel or nickel alloy metal substrate.

Embodiment 50. The bilayer of any one of embodiments 7-49, wherein the cathode comprises a cathode active material selected from the group consisting of manganese oxide, iron oxides, copper oxides, nickel oxides, lithium-manganese complex oxides, lithium-nickel complex oxides, lithium-cobalt complex oxides, lithium cobalt nickel oxides, lithium-manganese-cobalt complex oxides, spinel-phase lithium-manganese-nickel complex oxides, lithium phosphates having an olivine structure, lithium phosphates having a NASICON-type structure, iron (III) sulfate, vanadium oxides, and a combination thereof.

Embodiment 51. The bilayer of embodiment 50, wherein the cathode comprises a cathode active material selected from the group consisting of MnO, LiₓMn₂O₄, Liₓ MnO₂, LiₓNiO₂, LiₓCoO₂, LiNi_{(1-y)}CO_{y}O₂, LiMn_{y}Co_{(1-y)}O₂, LiₓMn_{(2-y)}Ni_{y}O₄, LiₓFePO₄, LiₓFe_{(1-y)}Mn_{y}PO₄, Liₓ CoPO₄, Li₇V₂(PO₄)₃, Fe₂(SO₄)₃, V₂O₅, and a combination thereof; wherein 1≤x≤5 and 0≤y≤1.

Embodiment 52. The bilayer of any one of embodiments 7-51, wherein the cathode comprises a cathode active material selected from the group consisting of LiMPO₄ (M=Fe, Ni, Co, Mn); LiₓTi_{y}O_{z}, wherein x is from 0 to 8, y is from 1 to 12, z is from 1 to 24; LiMn₂ₐNiₐO₄, wherein a is from 0 to 2; a nickel cobalt aluminum oxide; LiNiₓMn_{y}Co_{z}O₂, x+y+z=1, 0≤x≤1, 0≤y≤1, and 0≤z≤1; and LiNiₓCo_{y}Al_{z}O₂, wherein x+y+z=1, and 0≤x≤1, 0≤y≤1, and 0≤z≤1

Embodiment 53. The bilayer of embodiment 50, wherein the cathode comprises the cathode active material LiNiₓMn_{y}Co_{z}O₂ (NMC), wherein 0≤x≤1, 0≤y≤1, and 0≤z≤1, and wherein x+y+z=1.

Embodiment 54. The bilayer of embodiment 53, wherein x is 0.8, y is 0.1, and z is 0.1.

Embodiment 55. The bilayer of embodiment 53, wherein x is 0.6, y is 0.2, and z is 0.2.

Embodiment 56. The bilayer of embodiment 53, wherein x is 0.5, y is 0.3, and z is 0.2.

Embodiment 57. The bilayer of embodiment 53, wherein x is 1/3, y is 1/3, and z is 1/3.

Embodiment 58. The bilayer of any one of embodiments 53-57, wherein the NMC has a d₅₀ particle size, S, of 0.1 µm < S < 50 µm.

Embodiment 59. The bilayer of embodiment 58, wherein the NMC has a d₅₀ particle size, S, of 0.5 µm < S < 30 µm.

Embodiment 60. The bilayer of embodiment 59, wherein the NMC has a **d₅₀** particle size, S, of 1 µm < S < 20 µm.

Embodiment 61. The bilayer of any one of embodiments 7-60, wherein an edge of the cuts is from about 0 to 6 mm from the edge of the cathode material.

Embodiment 62. The bilayer of any one of embodiments7-61, wherein a distance between an edge of a first cut and an edge of a second, adjacent cut is from about 5 mm to 75 mm from the edge of the cathode material.

Embodiment 63. A green bilayer comprising:
a metal substrate having at least two longitudinal edges and at least two transverse edges; and
a cathode material disposed on the metal substrate;

wherein the cathode material covers at least about 50% of the surface of the metal substrate but does not cover the longitudinal edges; and
wherein the longitudinal edges comprise one or more cuts that extend from a longitudinal edge toward the cathode material.

Embodiment 64. The green bilayer of embodiment 63, wherein the cuts are periodically spaced.

Embodiment 65. The green bilayer of embodiment 63 or 64, wherein the cathode material covers at least one or more transverse edges.

Embodiment 66. The green bilayer of any one of embodiments 63-65, wherein the cuts comprise one or more slits.

Embodiment 67. The green bilayer of embodiment 66, wherein the slits comprise an I-shape, an L-shape, a T-shape, or a combination thereof.

Embodiment 68. The green bilayer of any one of embodiments 63-67, wherein the slits have a T-shape.

Embodiment 69. The green bilayer of any one of embodiments 63-65, wherein the cuts comprise one or more geometric shapes.

Embodiment 70. The green bilayer of embodiment 69, wherein the geometric shapes comprise a a triangle, a semicircle, an arch, a trapezoid, or a combination thereof.

Embodiment 71. The green bilayer of embodiment 70, wherein the geometric shapes comprise a trapezoid, and wherein the trapezoid is a rectangle.

Embodiment 72. The bilayer of any one of embodiments 66-71, wherein the cuts comprise one or more slits and one or more geometric shapes.

Embodiment 73. The green bilayer of any one of embodiments 63-72, wherein the metal substrate has one or more perforations or indentations shaped as one or more battery tabs.

Embodiment 74. The green bilayer of any one of embodiments 63-73, wherein the cathode material thickness is about 100 µm to 250 µm.

Embodiment 75. The green bilayer of any one of embodiments 63-74, wherein the cathode does not have substantial edge defects.

Embodiment 76. The green bilayer of any one of embodiments 63-74, wherein edge defects are selected from the group consisting of a crack, a bend, a warp, a wrinkle, a delamination, and combinations thereof.

Embodiment 77. The green bilayer of any one of embodiments 63-76, wherein at least three lanes of coating material are disposed on the metal substrate; and wherein a first and a second lane of coating material comprise cathode material.

Embodiment 78. A process of making a cathode, comprising:
providing a green bilayer comprising:
a metal substrate having at least two longitudinal edges and at least two transverse edges; and
a cathode material disposed on the metal substrate;
wherein the longitudinal edges comprise one or more cuts that extend from a longitudinal edge to the cathode material disposed on the metal substrate; and calendering the green bilayer at a temperature of less than 100 °C.

Embodiment 79. The process of embodiment 78, further comprising heating the bilayer.

Embodiment 80. The process of embodiment 78 or 79, wherein the process further includes heating the bilayer to a temperature of less than 75 °C.

Embodiment 81. The process of any one of embodiments 78-80, wherein the process further includes calendering the cathode at a pressure of at least about 50 MPa.

Embodiment 82. The process of any one of embodiments 78-81, further comprising die punching the bilayer.

Embodiment 83. The process of any one of embodiments 78-82, wherein the cathode material has a cathode active material loading of at least about 29 mg/cm².

Embodiment 84. The process of any one of embodiments 78-83, wherein the cathode material thickness is reduced from about 240 µm to 190 µm.

Embodiment 85. The process of any one of embodiments 78-84, wherein the cathode material porosity is reduced to about 25% or less.

Embodiment 86. The process of any one of embodiments 78-85, wherein the cathode after calendering has a variance in surface flatness of less than or equal to about 50 µm.

Embodiment 87. The process of any one of embodiments 78-86, wherein the calendering step has two active rollers.

Embodiment 88. The process of any one of embodiments 78-87, further comprising die punching the green bilayer to produce the cathode.

Embodiment 89. The process of any one of embodiments 78-88, further comprising:
using a laser pattern to prepare the green bilayer for later die punching.

Embodiment 90. The process of any one of embodiments 78-89, further comprising:
cutting the metal substrate; wherein the cutting comprises one or more cuts on longitudinal edges, and wherein the one or more cuts extend from a longitudinal edge to the cathode material disposed on the metal substrate.

Embodiment 91. The process of any one of embodiments 78-90, wherein the calendering step has two active rollers.

Embodiment 92. The process of any one of embodiments 78-91, wherein the cathode material covers at least about 50% of the surface of the metal substrate, but does not cover the longitudinal edges.

Embodiment 93. The process of any one of embodiments 78-92, wherein the green bilayer comprises at least three lanes of coating material disposed on the metal substrate; and wherein a first and a second lane of the coating material comprise the cathode material.

### Examples

As used herein, the symbols and conventions used in these processes, schemes, and examples, regardless of whether a particular abbreviation is specifically defined, are consistent with those used in the contemporary scientific literature.

### EXAMPLE 1A - General Preparation of Cathode and Current Collector

For the preparation of an exemplary high-energy-density cathode/current collector useful in the present invention, a cathode is cast on aluminum foil (Armor) that is 100 mm long by 260 mm wide by 18 µm thick.

A slurry is prepared including the solids (a) 90-98% w/w active material (e.g., a high nickel-content NMC, NCA, NMO, LCO, or LFP; such as 95-96 high nickel-content NMC), (b) 0.1-3% w/w binder (e.g., a PVDF-based polymer or PVDF-based co-polymer; such as Kurcha9700); (c) 1-3% w/w carbon (with varying surface area from 30 to 2000 m²/g; such as C65); and (d) a surfactant (e.g., functionalized PVDF polymers, polyvinyl alcohol, polyamines, polyacrylates, polyurethanes, polystyrenes, or any combinations of these; such as Zeon BM-740H), in which the sum of a + b + c + d is 100%. The slurry solvent is NMP.

The slurry is mixed via a multiple-step process and cast using a die coating system by the roll-to-roll casting method and using a doctor's blade casting. In one embodiment, the target loading was about 29 mg/cm². The initial thickness of the electrode after slurry casting is between about 245 µm to about 280 µm.

After coating, the electrode is dried by a multiple-stage drying process. In some embodiments, the temperatures of the stages are 80 °C, 100 °C, and 110 °C, and the cathode is passed through the stages at the speed of 1 m/min. The electrode is held for 8 hours at 110 °C. After the stages, the entire roll is dried again in oven for 8 hours at 110 °C under N₂ purging.

After drying, the electrode is calendered (e.g., using an ONO calendering tool) from the initial thickness to the final thickness of about 180 to 200 µm, based on the need of final porosity %.

### EXAMPLE 1B - Preparation of Exemplary Cathode 1

A slurry was prepared including the solids (a) 91% w/w NMC active material, (b) 5.0% w/w PVDF-based functionalized binder, (c) 3.0% w/w carbon black and (d) 1.0% w/w ketjen black in NMP solvent. The slurry was then cast onto carbon-coated aluminum foil 100 mm long by 260 mm wide and around 18 to 21 µm thick.

After coating, the electrode was dried by a multiple-stage drying process. The temperatures of the stages were 80 °C, 100 °C, and 110 °C, and the cathode was passed through the stages at the speed of 1 m/min. The electrode was held for 8 hours at 110 °C. After the stages, the entire roll was dried again in oven for 8 hours at 110 °C under N₂ purging.

After drying, the electrode was calendered (e.g., using an ONO calendering tool) from the initial thickness to the final thickness of about 180 to 200 µm, based on the need of final porosity %.

A cathode was cast on aluminum foil (Armor) that was 100 mm long by 260 mm wide by 18 µm thick.

A slurry was prepared including the solids (a) 95-96% w/w of an active material (i.e., a high nickel-content NMC), (b) 1-3% w/w binder (Kureha9700); (c) 1-3% w/w carbon (C65); and (d) a surfactant (Zeon BM-740H), in which the sum of a + b + c + d was 100%. The slurry solvent was NMP.

The slurry was mixed via a multiple-step process and casted using a die coating system by the roll-to-roll casting method and using a doctor's blade casting. The target loading was about 29 mg/cm². The initial thickness of the electrode after slurry casting was between about 245 µm to about 280 µm.

After coating, the electrode was dried by a multiple-stage drying process. The temperatures of the stages were 80 °C, 100 °C, and 110 °C, and the cathode was passed through the stages at the speed of 1 m/min. The electrode was held for 8 hours at 110 °C. After the stages, the entire roll was dried again in oven for 8 hours at 110 °C under N₂ purging.

After drying, the electrode was calendered using an ONO calendering tool from the initial thickness to the final thickness of about 180 to 200 µm, based on the need of final porosity %.

### EXAMPLE 2 - Preparation of Exemplary Cathode 2

A slurry was prepared including the solids (a) 95% w/w NMC active material, (b) 2.3% w/w PVDF-based functionalized binder and (c) 2.7% w/w carbon black in NMP solvent. The slurry was then cast onto aluminum foil 100 mm long by 260 mm wide by 18 µm thick. The coated electrode was then dried and calendered according to the method described in Example 1A.

### EXAMPLE 3 - Preparation of Exemplary Cathode 3

A slurry was prepared including the solids (a) 96% w/w NMC active material, (b) 2.3% w/w PVDF-based unfunctionalized binder and (c) 2.7% w/w carbon black in NMP solvent. The slurry was then cast onto aluminum foil 100 mm long by 260 mm wide by 18 µm thick. The coated electrode was then dried and calendered according to the method described in Example 1A.

### EXAMPLE 4 - Preparation of Exemplary Cathode 4

A slurry was prepared including the solids (a) 96% w/w NMC active material, (b) 2.0% w/w PVdF-based functionalized binder and (c) 2.0% w/w carbon black in NMP solvent. The slurry was then cast onto aluminum foil 100 mm long by 260 mm wide by 18 µm thick. The coated electrode was then dried and calendered according to the method described in Example 1A.

### EXAMPLE 5 - Preparation of Exemplary Cathode 5

A slurry was prepared including the solids (a) 96% w/w NMC active material, (b) 2.0% w/w PVdF-based functionalized binder and (c) 2.0% w/w carbon black in NMP solvent. The slurry was then cast onto carbon-coated aluminum foil 100 mm long by 260 mm wide and around 18 to 21 µm thick. The coated electrode was then dried and calendered according to the method described in Example 1A.

### EXAMPLE 6 - Preparation of Wrinkle-Free Cathode

To prepare a wrinkle-free cathode, a cathode slurry of Example 1B to 5 was used to coat a foil to form a coated foil with three lanes of cathode slurry. The bilayer was then laser notched, then calendered at a speed of around 2 m/min and at a temperature of less than 100 °C). The pressure during calendering was 2 - 10 ton per side. A slitter was then used to slit the foil between notched areas of the calendered cathode, and a die punch was used to punch out the wrinkle-free cathode.

Wrinkles are apparent when fewer than three lanes of coating were used. Wrinkles are absent/reduced when three lanes of coating were used. By maintaining a consistent average height across the aluminum foil with the three lanes, no wrinkles were observed.

### EXAMPLE 7 - Procedure for Reducing Burring

A comparison experiment was prepared with different cathodes to determine the effects of edge width on wrinkling and burring (FIG. 4). Cathodes with 5 mm, 2 mm, 1 mm, and 0.5 mm metal borders at the transverse edge of the cathode coating material were prepared, and the metal edges were removed. The results indicated that larger metal edges provided more wrinkling of the cathode material, but smaller metal edges provided more burring. However, the effects of burring at 0.5 mm were not as serious as the wrinkling effects at 5 mm.

The embodiments and examples described above are intended to be merely illustrative and non-limiting. Those skilled in the art will recognize or will be able to ascertain using no more than routine experimentation, numerous equivalents of specific compounds, materials and procedures. All such equivalents are considered to be within the scope and are encompassed by the appended claims.

All publications and patent, applications cited in this specification are herein incorporated by reference as if each individual publication or patent application were specifically and individually indicated to be incorporated by reference. While the claimed subject matter has been described in terms of various embodiments, the skilled artisan will appreciate that various modifications, substitutions, omissions, and changes may be made without departing from the spirit thereof. Accordingly, it is intended that the scope of the subject matter limited solely by the scope of the following claims, including equivalents thereof.

The following clauses list non-limiting aspects of the disclosure:
1. A bilayer comprising:
   a metal substrate having at least two longitudinal edges and at least two transverse edges;
   at least three lanes of coating material disposed on the metal substrate;

   wherein a first and a second lane of coating material comprise cathode material; and
   wherein the longitudinal edges comprise one or more cuts that extend from a longitudinal edge toward the coating material.
2. The bilayer of clause 1, wherein the coating material covers at least about 50% of the surface of the metal substrate but does not cover the longitudinal edges.
3. The bilayer of any one of clauses 1 or 2, wherein a third lane of slurry material comprises cathode material.
4. The bilayer of any one of clauses 1 or 2, wherein a third lane of coating material does not comprise cathode material.
5. The bilayer of any one of clauses 1-4, wherein the three lanes of coating material are identical in composition.
6. The bilayer of any one of clauses 1-4, wherein the three lanes of coating material are not identical in composition.
7. The bilayer of any one of clauses 1-6, wherein the first and third lanes are deposited from 1 to 5 mm from the longitudinal edge exclusive of any tab feature.
8. The bilayer of any one of clauses 1-7, wherein the cuts are periodically spaced.
9. The bilayer of any one of clauses 1-7, wherein the cuts are not periodically spaced.
10. The bilayer of any one of clauses 1-9, wherein the cuts are present on both longitudinal edges.
11. The bilayer of any one of clauses 1-10, wherein the cathode material covers the substrate as patches.
12. The bilayer of any one of clauses 1-11, wherein the cathode material further comprises a center cut parallel to the longitudinal edge.
13. The bilayer of any one of clauses 1-12, wherein the cuts comprise one or more slits.
14. The bilayer of clause 13, wherein the slits comprise an I-shape, an L-shape, a T-shape, or combinations thereof.
15. The bilayer of any one of clauses 1-12, wherein the cuts comprise one or more geometric shapes.
16. The bilayer of clause 15, wherein the geometric shapes comprise a triangle, a semicircle, an arch, a trapezoid, a parallelogram, or combinations thereof.
17. The bilayer of any one of clauses 1-16, wherein the metal substrate has one or more perforations or indentations shaped as one or more battery tabs.
18. The bilayer of any one of clauses 1-17, wherein the cathode material has a cathode active material loading of at least 27 mg/cm².
19. The bilayer of any one of clauses 1-18, wherein the cathode material thickness is less than 250 µm.
20. The bilayer of clause 19, wherein the cathode material thickness is less than about 150 µm.
21. The bilayer of any one of clauses 1-20, wherein the cathode material porosity is about 25% or less by volume.
22. The bilayer of any one of clauses 1-21, wherein the cathode does not have substantial edge defects.
23. The bilayer of any one of clauses 1-22, wherein the cathode has a surface flatness of less than or equal to about 50 µm per cm².
24. The bilayer of any one of clauses 1-23, wherein the metal substrate is an aluminum or aluminum alloy metal substrate.
25. The bilayer of clause 24, wherein the metal substrate is an aluminum foil.
26. The bilayer of any one of clauses 1-25, wherein the cathode comprises a cathode active material selected from the group consisting of manganese oxide, iron oxides, copper oxides, nickel oxides, lithium-manganese complex oxides, lithium-nickel complex oxides, lithium-cobalt complex oxides, lithium cobalt nickel oxides, lithium-manganese-cobalt complex oxides, spinel-phase lithium-manganese-nickel complex oxides, lithium phosphates having an olivine structure, lithium phosphates having a NASICON-type structure, iron (III) sulfate, vanadium oxides, and a combination thereof.
27. The bilayer of any one of clauses 1-26, wherein the cathode comprises a cathode active material selected from the group consisting of LiMPO₄ (M=Fe, Ni, Co, Mn); LiₓTi_{y}O_{z}, wherein x is from 0 to 8, y is from 1 to 12, z is from 1 to 24; LiMn₂ₐNiₐO₄, wherein a is from 0 to 2; a nickel cobalt aluminum oxide; LiNiₓMn_{y}Co_{z}O₂, x+y+z=1, 0≤_{X}≤1, 0≤y≤1, and 0≤z≤1; and LiNiₓCo_{y}Al_{z}O₂, wherein x+y+z=1, and 0≤x≤1, 0≤y≤1, and 0≤z≤1.
28. The bilayer of clause 27, wherein the cathode comprises the cathode active material LiNiₓMn_{y}Co_{z}O₂ (NMC), wherein 0≤x≤1, 0≤y≤1, and 0≤z≤1, and wherein x+y+z=1.
29. The bilayer of clause 28, wherein the NMC has a d₅₀ particle size, S, of 0.1 µm < S < 50 µm.
30. The bilayer of any one of clauses 1-29, wherein an edge of the cuts is from about 0 to 6 mm from the edge of the cathode material.
31. A green bilayer comprising:
   a metal substrate having at least two longitudinal edges and at least two transverse edges; and
   a cathode material disposed on the metal substrate;

   wherein the cathode material covers at least about 50% of the surface of the metal substrate but does not cover the longitudinal edges; and
   wherein the longitudinal edges comprise one or more cuts that extend from a longitudinal edge toward the cathode material.
32. The green bilayer of clause 31, wherein the cuts comprise one or more slits.
33. The green bilayer of clause 32, wherein the slits comprise an I-shape, an L-shape, a T-shape, or a combination thereof.
34. The green bilayer of clause 31, wherein the cuts comprise one or more geometric shapes.
35. The green bilayer of clause 34, wherein the geometric shapes comprise a a triangle, a semicircle, an arch, a trapezoid, or a combination thereof.
36. The green bilayer of any one of clauses 31-35, wherein the metal substrate has one or more perforations or indentations shaped as one or more battery tabs.
37. The green bilayer of any one of clauses 31-36, wherein the cathode material thickness is about 100 µm to 250 µm.
38. The green bilayer of any one of clauses 31-37, wherein at least three lanes of coating material are disposed on the metal substrate; and wherein a first and a second lane of coating material comprise cathode material.
39. A process of making a cathode, comprising:
   providing a green bilayer comprising:
   a metal substrate having at least two longitudinal edges and at least two transverse edges; and
   a cathode material disposed on the metal substrate;
   wherein the longitudinal edges comprise one or more cuts that extend from a longitudinal edge to the cathode material disposed on the metal substrate; and calendering the green bilayer at a temperature of less than 100 °C.
40. The process of clause 39, further comprising heating the bilayer.
41. The process of clause 39 or 40, wherein the process further includes heating the bilayer to a temperature of less than 75 °C.
42. The process of any one of clauses 39-41, wherein the process further includes calendering the cathode at a pressure of at least about 50 MPa.
43. The process of any one of clauses 39-42, further comprising die punching the bilayer.
44. The process of any one of clauses 39-43, wherein the cathode material thickness is reduced from about 240 µm to 190 µm.
45. The process of any one of clauses 39-44, wherein the cathode material porosity is reduced to about 25% or less.
46. The process of any one of clauses 39-45, further comprising die punching the green bilayer to produce the cathode.
47. The process of any one of clauses 39-46, further comprising:
   using a laser pattern to prepare the green bilayer for later die punching.
48. The process of any one of clauses 39-47, further comprising:
   cutting the metal substrate; wherein the cutting comprises one or more cuts on longitudinal edges, and wherein the one or more cuts extend from a longitudinal edge to the cathode material disposed on the metal substrate.
49. The process of any one of clauses 39-48, wherein the cathode material covers at least about 50% of the surface of the metal substrate, but does not cover the longitudinal edges.
50. The process of any one of clauses 39-49, wherein the green bilayer comprises at least three lanes of coating material disposed on the metal substrate; and wherein a first and a second lane of the coating material comprise the cathode material.

## Claims

1. A bilayer, comprising:
a metal substrate having at least two longitudinal edges and at least two transverse edges; and
a cathode material disposed on the metal substrate;
where the cathode material covers at least about 50% of the surface of the metal substrate but does not cover the longitudinal edges;
wherein the cathode material covers the substrate as patches.

2. The bilayer of claim 1, wherein a gap in the cathode material on the substrate is periodic.

3. The bilayer of any one of the preceding claims, wherein the cathode material of the bilayer is disposed on the metal substrate in two discontinuous lanes that are parallel to the longitudinal edges.

4. The bilayer of any one of the preceding claims, wherein the longitudinal edges comprise one or more cuts that extend from a longitudinal edge toward the cathode material.

5. The bilayer of claim 4, wherein the one or more cuts comprise one or more slits, and the one or more slits comprise an I-shape, an L-shape, a T-shape, or a combination thereof.

6. The bilayer of any one of the preceding claims, wherein the metal substrate is an aluminum foil.

7. The bilayer of any one of the preceding claims, wherein
(a) the cathode material has a cathode active material loading of at least 27 mg/cm²; and/or
(b) the cathode material has a porosity of about 25% or less by volume; and/or
(c) the cathode has a surface flatness of less than or equal to about 50 µm per cm².

8. The bilayer of any one of the preceding claims, wherein the cathode does not have substantial edge defects.

9. The bilayer of any one of the preceding claims, comprising:
a metal substrate having at least two longitudinal edges and at least two transverse edges;
at least three lanes of coating material disposed on the metal substrate; wherein a first and a second lane of coating material comprise cathode material; and
wherein the longitudinal edges comprise one or more cuts that extend from a longitudinal edge toward the coating material,
wherein the coating material covers at least about 50% of the surface of the metal substrate but does not cover the longitudinal edges, and
wherein the cathode material covers the substrate as patches.

10. A process of making a cathode including:
coating a metal substrate with a cathode slurry to provide a green bilayer comprising a cathode material disposed on the metal substrate,
wherein the metal substrate has at least two longitudinal edges and at least two transverse edges;
wherein the cathode material covers at least about 50% of the surface of the metal substrate, but does not cover the longitudinal edges;
wherein the cathode material covers the substrate as patches and
calendering the green bilayer; and die punching the green bilayer to produce the cathode.

11. The process of claim 10, wherein the cathode is a bilayer of any of claims 1-9.

12. The process of claim 10 or claim 11, wherein a gap in the cathode material on the substrate is periodic.

13. The process of any one of claims 10-12, wherein the calendering is performed at a temperature of less than 100 °C.

14. The process of any one of claims 10-13, wherein the process further includes using a laser pattern to prepare the green bilayer for later die punching.

15. The process of any one of claims 10-14, further comprising cutting the metal substrate; wherein the cutting includes one or more cuts on longitudinal edges, and wherein the one or more cuts extend from a longitudinal edge to the cathode material disposed on the metal substrate.
